(19) Europäisches Patentamt / European Patent Office / Office européen des brevets

(11) **EP 3 179 328 B1**

(12) **FASCICULE DE BREVET EUROPEEN**

(45) Date de publication et mention
de la délivrance du brevet:
**08.08.2018 Bulletin 2018/32**

(51) Int Cl.:
***G05D 1/00*** *(2006.01)* ***G05D 1/08*** *(2006.01)*

(21) Numéro de dépôt: **16199028.8**

(22) Date de dépôt: **16.11.2016**

(54) **PROCÉDÉ ET DISPOSITIF DE PILOTAGE D'UN AÉRONEF**

VERFAHREN UND VORRICHTUNG ZUR STEUERUNG EINES LUFTFAHRZEUGS

A METHOD AND A DEVICE FOR PILOTING AN AIRCRAFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.12.2015 FR 1502552**

(43) Date de publication de la demande:
**14.06.2017 Bulletin 2017/24**

(73) Titulaire: **Airbus Helicopters
13725 Marignane Cedex (FR)**

(72) Inventeur: **TORRALBA, José
31270 CUGNAUX (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
**FR-A1- 2 978 858     US-A1- 2013 261 853
US-A1- 2014 027 565     US-A1- 2014 316 615**

## Description

La présente invention concerne un procédé et un dispositif de pilotage d'un aéronef.

L'invention se situe donc dans le domaine technique des aéronefs disposant d'un système d'aide au pilotage. En particulier, l'invention se situe dans le domaine technique d'un système d'aide au pilotage exploitant des capteurs délivrant avec une précision donnée des informations relatives au déplacement de l'aéronef, telle qu'une vitesse angulaire, une attitude, une accélération, une vitesse sol.

Le déplacement d'un aéronef est usuellement contrôlé en manoeuvrant des organes de contrôle de cet aéronef. Chaque organe de contrôle a pour fonction de participer au contrôle de la position dans l'espace de l'aéronef. Pour manoeuvrer les organes de contrôle, l'aéronef peut posséder des actionneurs.

A titre illustratif, les pales d'un rotor principal et les pales d'un rotor de queue d'un hélicoptère représentent de tels organes de contrôle. Des actionneurs de type servocommande permettent alors de contrôler le pas des pales. De plus, des actionneurs de type doseur de carburant permettent d'agir sur des organes de contrôle prenant la forme de moteurs entraînant en rotation les pales.

Un système d'aide au pilotage d'un aéronef peut comporter divers modes de pilotage qui mettent en oeuvre des lois de pilotage pour commander les actionneurs de l'aéronef. Une loi de pilotage permet de donner un ordre à au moins un actionneur en fonction de la valeur courante de divers paramètres et d'au moins un objectif à tenir. Parmi ces paramètres, une loi de pilotage peut faire intervenir au moins une composante de la vitesse sol de l'aéronef dans un référentiel terrestre.

De multiples lois de pilotages sont connues. Par exemple, une loi de pilotage par objectif vise à tenir un objectif particulier. Le document FR 2 814 433 fait référence à de telles lois.

A titre illustratif, une loi de pilotage en vitesse sol d'un aéronef à voilure tournante vise à tenir un objectif de vitesse sol qui est donné à l'aide d'une commande manoeuvrée par un pilote. Lorsque le pilote positionne le moyen de commande dans une position centrale, ce pilote peut par exemple requérir une vitesse sol nulle. La loi de pilotage en vitesse sol permet alors à l'aéronef de rester immobile en effectuant un vol en stationnaire.

Pour tenir un objectif en fonction de la vitesse sol, un système d'aide au pilotage peut utiliser divers systèmes de mesure de vitesse pour évaluer au moins une composante de la vitesse sol courante dans un référentiel terrestre.

Un premier système de mesure de vitesse prend la forme d'une centrale inertielle. Une centrale inertielle est un instrument utilisé sur un aéronef pour estimer son attitude, sa vitesse voire sa position au regard d'un point de départ.

Une centrale inertielle est usuellement munie d'une unité inertielle de mesures connue sous l'acronyme « IMU » correspondant à l'expression anglaise « Inertial Measurement Unit ». L'unité inertielle de mesures comprend de multiples capteurs inertiels. Une unité inertielle de mesures peut notamment comprendre trois gyromètres utilisés pour mesurer les composantes d'un vecteur vitesse angulaire selon trois axes. De plus, une unité inertielle de mesures peut comprendre trois accéléromètres pour mesurer les composantes d'un vecteur de force spécifique (grandeur équivalente au facteur de charge) selon les trois axes de l'aéronef, par rapport au référentiel terrestre.

En outre, la centrale inertielle comprend un calculateur relié à l'unité inertielle de mesures. Le calculateur réalise le cas échéant l'intégration en temps réel des mesures effectuées par l'unité inertielle de mesures pour déterminer les composantes du vecteur vitesse sol de l'aéronef, voire un angle de tangage ainsi qu'un angle de roulis et un angle de cap de l'aéronef ainsi que la position de l'aéronef. Plus précisément, par intégration des mesures des gyromètres, le calculateur détermine l'attitude de l'aéronef et donc son orientation à un moment donné. De plus, par intégration des mesures des accéléromètres, qui peuvent être rapportées à un référentiel terrestre extérieur à l'aéronef grâce à la connaissance de l'orientation de l'aéronef, le calculateur détermine les composantes de la vitesse sol de l'aéronef par exemple dans le référentiel terrestre. Enfin, par intégration de la vitesse, le calculateur détermine la position géographique de l'aéronef.

De fait, les capteurs inertiels de l'unité inertielle de mesures présentent des biais de mesure, qui peuvent d'ailleurs varier au cours de la navigation. De plus, ces capteurs inertiels sont sujets à des bruits de mesure. Les signaux électriques émis par les capteurs inertiels sont de plus traités par des circuits électroniques qui eux-mêmes introduisent du bruit.

Les biais et bruits de mesure faussent alors les mesures effectuées. Les centrales inertielles sont intéressantes car ces centrales inertielles présentent une très bonne disponibilité mais sont donc sujettes à des erreurs qui engendrent au cours du temps des dérives des mesures effectuées, en particulier de la vitesse sol intégrée.

Pour optimiser le fonctionnement d'une centrale inertielle, cette centrale inertielle peut être pourvue de capteurs performants, tels que des gyromètres présentant des erreurs n'excédant pas quelques centièmes degrés par heure et des accéléromètres présentant des erreurs n'excédant pas quelques dizaines de millionièmes de la gravité terrestre. Une telle centrale inertielle s'avère toutefois très onéreuse.

Un deuxième système prend la forme d'un système de positionnement par satellites.

Un tel système de navigation par satellites comprend un récepteur embarqué dans un véhicule, qui reçoit des signaux de plusieurs satellites appartenant à une constellation de satellites, cette constellation étant contrôlée par une infrastructure terrestre fixe dite « segment sol ». L'ensemble constitué du récepteur, de la constellation et du segment sol constitue un système de navigation par satellites, généralement désigné par l'acronyme « GNSS » correspondant à l'expression anglaise « Global Navigation Satellite System ». Plusieurs systèmes de navigation par satellites GNSS sont actuellement opérationnels, tels que le système connu sous l'acronyme « GPS » correspondant à l'expression anglaise « *Global Positioning System* », et le système GLONASS de la Russie. Les systèmes BEIDOU Chinois, le système japonais QZSS et le système GALILEO Européen sont actuellement en cours de développement ou de déploiement.

Un système de navigation par satellites permet notamment de déterminer la position d'un aéronef ainsi que les composantes de la vitesse sol de cet aéronef dans le référentiel terrestre.

Une limitation générale à l'utilisation des systèmes de navigation par satellites dans les systèmes de pilotage des aéronefs réside dans la possibilité de pannes multiples affectant simultanément plusieurs satellites, voire même une constellation complète.

Le document FR 3030058 déposé le 11 décembre 2014 auprès de l'Institut National de la Propriété Industrielle en France sous la référence 14 02824 propose notamment l'utilisation de plusieurs constellations différentes de satellites.

Par ailleurs, un système de navigation par satellites est sensible aux perturbations extérieures, telles que des perturbations atmosphériques par exemple.

Par conséquent, un troisième système consiste à coupler une centrale inertielle avec un système de navigation par satellites pour obtenir les composantes estimées d'une vitesse sol tendant à limiter les imprécisions de mesures. Le couplage peut être réalisé en utilisant un filtre de Kalman. Le filtre de Kalman permet d'obtenir les composantes estimées d'une vitesse sol à partir de composantes d'une vitesse sol obtenues avec le système de navigation par satellites et de composantes d'une vitesse sol obtenues avec la centrale inertielle.

Les composantes de la vitesse sol obtenues avec le système de navigation par satellites sont qualifiées de « mesurées » dans la mesure où le système de navigation par satellites ne présentent pas d'erreurs de mesure fluctuant dans le temps.

A l'inverse, les composantes de la vitesse obtenues avec la centrale inertielle sont qualifiées de « prédites » en raison de ces erreurs.

La disponibilité et la précision des données des systèmes de navigation par satellites et des centrales inertielle n'étant pas parfaites, le contrôle de l'aéronef avec une loi de pilotage utilisant ces données peut être délicat à réaliser.

En outre, le niveau d'assistance de plus en plus élevé des aéronefs peut entraîner une certaine perte d'attention de la part du pilote lorsqu'un mode de pilotage automatique est engagé.

De ce fait, le fonctionnement d'un système de pilotage automatique est surveillé par un système de surveillance.

Le système de surveillance d'un système de contrôle automatique du vol d'un aéronef remplit la fonction de sécurisation des données envoyées au module de pilotage automatique qui génère les lois de pilotage appliquées pour commander les actionneurs. Sa fonction est également d'envoyer l'information nécessaire à la prise de conscience par l'équipage d'une situation éventuellement dégradée affectant les capteurs utilisés, par exemple. La conséquence de dégradations de capteurs sur la charge de travail du pilote est rendue transparente au pilote la plupart du temps grâce à la redondance des capteurs employés et à la gestion qu'en fait le système de surveillance, par exemple via des algorithmes connus sous l'acronyme « FDIR » correspondant à l'expression anglaise « Fault Détection Isolation and Recovery ». Après une panne multiple, c'est-à-dire affectant plusieurs des capteurs redondés, la conséquence sur la charge de travail du pilote peut par contre être assez lourde.

En particulier, la valeur d'un paramètre utilisé par une loi de pilotage peut s'avérer indisponible.

Dans le cas où un paramètre utile au pilotage automatique est déclaré indisponible par le système de surveillance, le système de pilotage automatique est automatiquement désengagé pour laisser la place à un pilotage manuel à l'issue d'une durée de temporisation. La transition entre le mode de pilotage automatique et le mode de pilotage manuel s'accompagne d'une variation importante et relativement brusque de la charge de travail pour le pilote.

Par exemple, lors d'un vol stationnaire effectué en engageant un mode de pilotage automatique mettant en oeuvre une loi de pilotage ayant un objectif de vitesse sol à tenir, un pilote peut concentrer son attention sur d'autres aspects, tels qu'une opération de treuillage par exemple. Un dysfonctionnement du système mesurant la vitesse sol de l'aéronef peut induire un mouvement imprévu de l'aéronef devant être contré par le pilote, voire suivant la panne un désengagement brutal du mode de pilotage automatique. Le pilote doit alors prendre le contrôle partiel ou total de l'aéronef.

L'effet de dégradations affectant des capteurs utilisés par un système de contrôle automatique du vol peut donc se traduire pour le pilote par un changement de stratégie de pilotage, en passant éventuellement en quelques secondes d'un mode de pilotage automatique à haute assistance à un mode de pilotage manuel.

Les documents US 2014/027565, US 2014/316615, FR 2978858 et US 2013/261853 sont aussi connus.

La présente invention a alors pour objet de proposer un procédé permettant d'éviter un tel changement abrupt dans certaines conditions.

L'invention vise donc un procédé d'aide au pilotage d'un aéronef comprenant au moins un actionneur agissant sur un organe de contrôle permettant de contrôler la position de l'aéronef dans l'espace, l'aéronef mémorisant au moins deux lois de pilotage pouvant chacune être appliquée pour générer un ordre transmis à au moins un actionneur, l'aéronef comprenant un système de mesure principal et un système de mesure secondaire qui déterminent respectivement au moins une valeur dite « valeur prédite » et au moins une valeur dite « valeur mesurée » d'un paramètre utilisé dans une des lois de pilotage dénommée « loi de pilotage par défaut », chaque loi de pilotage distincte de la loi de pilotage par défaut étant dite « loi de pilotage dégradée ».

Ce procédé comporte les étapes suivantes :

- calcul avec une unité de filtrage appliquant un algorithme de Kalman d'une valeur estimée à partir d'au moins une valeur prédite et d'au moins valeur mesurée et estimation d'au moins une marge de précision de mesure,

- comparaison de la valeur d'une marge de précision de mesure avec un seuil correspondant,

- commande dudit actionneur en appliquant automatiquement ladite loi de pilotage par défaut tant que chaque marge de précision de mesure est inférieure au seuil correspondant,

- commande dudit actionneur en appliquant automatiquement une loi de pilotage dite « loi de pilotage dégradée » lorsqu'au moins une marge de précision de mesure est supérieure ou égale au seuil correspondant.

Le terme « paramètre » désigne un paramètre d'état de l'aéronef à choisir dans une liste comprenant notamment les composantes de la vitesse sol de l'aéronef dans un référentiel donné et par exemple dans le référentiel tridimensionnel terrestre, les composantes de l'accélération de l'aéronef dans ce référentiel donné, les composantes de la vitesse angulaire de l'aéronef dans ce référentiel donné, un angle de tangage de l'aéronef, un angle de roulis de l'aéronef.

En particulier, le système de mesure principal et le système de mesure secondaire peuvent déterminer au moins les valeurs prédites et les valeurs mesurées de mêmes paramètres, et notamment les composantes de la vitesse sol.

L'unité de filtrage estime alors des valeurs dites « valeurs estimées » des paramètres quantifiés par le système de mesure principal, en utilisant toutes les valeurs prédites et mesurées.

L'expression « seuil correspondant » fait référence au seuil correspondant à une marge de précision de mesure particulière. Chaque marge de précision de mesure est en effet à comparer à un seuil particulier dit « seuil correspondant ». Plusieurs marges de précision de mesure distinctes peuvent être comparées à un même seuil.

Le système de mesure principal permet de déterminer des valeurs prédites de paramètres à chaque instant. Néanmoins, ces valeurs prédites peuvent être entachées d'erreurs.

Par exemple, le système de mesure principal comporte une pluralité de gyromètres et une pluralité d'accéléromètres. Le système de mesure principal peut donc comporter au moins une unité de mesure inertielle susceptible de présenter des erreurs de mesure qui engendrent une augmentation de l'erreur sur certains paramètres comme la vitesse sol en fonction de l'évolution du temps.

A l'inverse, le système de mesure secondaire permet de déterminer des valeurs mesurées de ces paramètres. Néanmoins, ces valeurs mesurées peuvent être indisponibles à certains instants.

Par exemple, le système de mesure secondaire est un moyen de positionnement par satellites.

Alternativement, le système de mesure secondaire comporte un moyen de détection d'objet émettant un signal de détection susceptible de revenir vers le moyen de détection d'objet suite à un impact avec un objet.

Une autre variante de l'invention consiste donc à utiliser par exemple un système connu sous l'acronyme LIDAR correspondant à l'expression anglaise « LIght Détection And Ranging », un imageur ou un équipement connu sous l'acronyme RADAR.

Ces équipements sont efficaces mais peuvent temporairement s'avérer inopérants.

Dès lors, l'unité de filtrage applique un algorithme usuel de Kalman permettant d'identifier de manière continue les erreurs du système de mesure principal par l'intermédiaire d'une modélisation, dénommée classiquement « modèle d'erreur ». Un tel algorithme de Kalman est usuellement dénommé « filtre de Kalman ».

Par suite, l'unité de filtrage permet de déterminer les composantes estimées de paramètres de pilotage de l'aéronef, tels que par exemple les composantes de la vitesse sol de l'aéronef dans un référentiel donné et par exemple le référentiel tridimensionnel terrestre, les composantes de l'accélération de l'aéronef dans ce référentiel donné, les composantes de la vitesse angulaire de l'aéronef dans ce référentiel donné, un angle de tangage de l'aéronef, un angle de roulis de l'aéronef.

En effet, l'unité de filtrage peut quantifier à chaque instant de calcul les erreurs du système de mesure principal. Chaque donnée estimée par l'unité de filtrage est alors obtenue en soustrayant à une donnée provenant du système de mesure principal une erreur estimée de ce système de mesure principal.

A titre illustratif, le système de mesure principal estime notamment les valeurs prédites des composantes de la vitesse sol dans le référentiel terrestre. Le système de mesure secondaire fournit à l'unité de filtrage les valeurs mesurées des composantes de la vitesse sol dans le référentiel terrestre. L'unité de filtrage détermine alors une erreur de vitesse sol pour chaque composante de la vitesse sol en fonction des valeurs prédites et mesurées.

Chaque valeur estimée d'une composante de la vitesse sol est alors égale à la différence de la valeur prédite de cette composante de la vitesse sol moins l'erreur de vitesse pour cette composante.

De plus, cette unité de filtrage permet de déterminer la précision des données exploitées. En effet, l'unité de filtrage établit une matrice de covariance, chaque marge de précision de mesure étant alors égale à la racine carrée d'un terme correspondant présent sur la diagonale de cette matrice de covariance. Par exemple, la matrice de covariance comporte sur sa diagonale des termes respectivement relatifs aux paramètres précédemment cités.

Chaque marge de précision de mesure représente la marge de précision d'un paramètre. Par exemple, l'unité de filtrage estime une valeur de la composante horizontale de la vitesse sol de l'aéronef à 100 noeuds, et estime la marge de précision de cette valeur à 0.5 noeud. La composante horizontale est donc égale à 100 noeuds plus ou moins 0.5 noeud.

Pour mémoire, un noeud correspond à un mille marin par heure, soit 1,852 kilomètre par heure ou 0,514 mètre par seconde.

On se rapportera à la littérature pour obtenir des informations sur les unités de filtrage mettant en oeuvre des algorithmes de Kalman. Par exemple, le site internet Wikipédia publie les diverses équations d'un filtre de Kalman. On peut aussi se référer pour plus de détails au document de l'ISAE (Institut Supérieur de L'Aéronautique et de l'Espace) en suivant le lien : https://www.google.fr/url?sa=t&rct=j&q=&esrc=s&source=web&cd=1&ved=0ahUKEwj0rJmQ36PJAhXlwBQKHZcKDT8QFggMAA&url=http%3A%2F%2Fpersonnel.isae.fr%2Fsites%2Fpersonnel%2FIMG%2F pdf%2FintroKalman vf 2008.pdf&usg=AFQjCNFQbCt6m4lt4-lnksCO53sPfCavlg&sig2=0QnxCjUu0zlyiB-mblF8vg&bvm=bv.108194040,d.ZWU&cad=rja.

Tant que le système de mesure secondaire est opérationnel, chaque marge de précision de mesure est inférieure à un seuil prédéterminé.

Dès lors, le système de pilotage automatique contrôle l'aéronef en appliquant la loi de pilotage par défaut, c'est-à-dire la loi de pilotage qui propose la meilleure assistance au pilotage.

Par contre, lorsque le système de mesure secondaire est temporairement inopérant, les erreurs du système de mesure principal croissent. L'aéronef est alors piloté en appliquant automatiquement une loi de pilotage dégradée.

Par conséquent, ce procédé ne propose pas de déconnecter le système de pilotage automatique mais propose d'appliquer une loi de pilotage dégradée plus adaptée à la situation.

Afin de maintenir une charge de travail adéquate pour le pilote lors de phases d'absence de fonctionnement du système de mesure secondaire, ce procédé permet la transition automatique vers des lois de pilotage dégradées en fonction de l'état des systèmes de mesure. Cette transition est automatique et ne nécessite donc pas une reconfiguration manuelle du système de pilotage par le pilote. La charge de travail de ce pilote est donc limitée dans des situations potentiellement stressantes pour ce pilote.

L'expression « loi de pilotage dégradée » renvoie à une loi augmentant la charge de travail d'un pilote, mais en contrepartie plus robuste à certaines erreurs de capteurs.

Dès lors, différentes lois de pilotage dégradées peuvent être implémentées, chaque loi de pilotage dégradée étant associée à des configurations d'utilisation dépendant de marges de précision de mesure.

Ces lois de pilotage dégradées sont adaptées aux types d'erreurs rencontrés avec le système de mesure principal, et à l'amplitude de ces erreurs en fonction des amplitudes typiquement acceptables pour le pilotage. Plus l'erreur du système de mesure principal est importante, plus les marges de précision de mesure seront élevées. En fonction des erreurs rencontrées, l'invention propose alors diverses lois de pilotage.

Ce procédé propose donc de manière automatique au pilote la loi de pilotage la plus adaptée en fonction de l'état estimé du système de mesure principal, cet état étant estimé au travers des marges des précisions de mesure.

L'expression « la plus adaptée », renvoie à la loi de pilotage offrant le meilleur compromis entre la charge de travail du pilote pour contrôler l'aéronef, et la robustesse de la loi de pilotage au regard d'erreurs de mesure.

Cette automatisation de la commutation entre divers types de lois de pilotage n'est pas évidente. En effet, la définition de seuils permettant la commutation entre différentes lois n'est pas évidente car ces seuils doivent prendre en considération la charge de travail jugée acceptable pour le pilote, et doivent permettre de minimiser l'augmentation de charge de travail de ce pilote suite à un changement de loi de pilotage.

De plus, les marges de précision de mesure estimées restituent de fait la plus ou moins forte variation de la précision du ou des paramètres d'intérêt en fonction de la trajectoire plus ou moins dynamique de l'aéronef. Une trajectoire dynamique induit une variation importante des marges de précision de mesure.

Cette information riche est transmise en temps réelle grâce aux informations fournies par le système de mesure principal (e.g. facteurs de charge), afin d'optimiser la disponibilité de la loi de pilotage par défaut lors de la perte de l'information du système de mesure secondaire.

Par exemple, sur un vol peu dynamique après la perte du système de mesure secondaire, les marges de précision de mesure peuvent évoluer lentement. La loi de pilotage par défaut peut alors éventuellement être utilisée pendant tout le reste du vol, même si l'information de mesure secondaire ne revient pas.

Au contraire, si la trajectoire est plus dynamique, les marges de précision de mesure peuvent évoluer rapidement et informeront le système de la plus forte croissance (par rapport au cas peu dynamique) des erreurs. La loi de pilotage par défaut sera ainsi désactivée relativement tôt, mais potentiellement plus tard que si l'on utilisait un système classique de désactivation après une temporisation partant de l'instant de perte de la mesure secondaire.

Le procédé peut de plus comporter une ou plusieurs des caractéristiques qui suivent.

Ainsi, le procédé peut comporter une étape d'alerte durant laquelle une alerte est générée lorsqu'une loi de pilotage dégradée est appliquée.

Une alerte visuelle et/ou sonore et/ou haptique est générée pour que le pilote ait connaissance de la loi de pilotage appliquée. Par exemple, un écran affiche un message indiquant quelle loi de pilotage est appliquée.

Eventuellement, la loi de pilotage par défaut est une loi de pilotage principale en vitesse sol qui génère un ordre donné à au moins un actionneur pour tenir un objectif de vitesse sol.

Par exemple, le pilote d'un hélicoptère manoeuvre un manche de commande de pas cyclique pour générer un objectif de vitesse sol. Le système de pilotage automatique applique alors la loi de pilotage principale en vitesse sol pour atteindre l'objectif de vitesse sol donné.

Cette loi de pilotage principale en vitesse sol impose en particulier lors de chaque virage une vitesse latérale à réaliser par rapport au sol de l'aéronef selon une direction latérale présente dans un plan horizontal perpendiculaire à la pesanteur, la direction latérale étant perpendiculaire au cap suivi.

L'expression « vitesse latérale à réaliser désigne un vitesse devant être atteinte lors de la manoeuvre.

Cette vitesse latérale à réaliser lors des virages peut bien sûr être modifiée par le pilote s'il le souhaite. En particulier, la vitesse latérale à réaliser peut être une vitesse nulle en l'absence d'ordre spécifique donné par le pilote pour ce paramètre, ou une vitesse latérale particulière sélectionnée par le pilote.

La loi de pilotage principale en vitesse sol offre au pilote un haut niveau d'assistance. En particulier, la loi de pilotage principale en vitesse sol permet d'assister le pilote pour coordonner les virages, c'est-à-dire pour maintenir une vitesse latérale particulière pendant le virage. Des termes de découplage dans la loi de pilotage principale en vitesse sol sont alors prévus. Ces termes dépendent de la vitesse angulaire en lacet de l'aéronef et des composantes de la vitesse sol de l'aéronef.

Une telle loi de pilotage principale en vitesse sol est connue par l'homme du métier.

En outre, une loi de pilotage dégradée peut être une loi de pilotage secondaire en vitesse sol qui génère un ordre donné à au moins un actionneur pour tenir un objectif de vitesse sol, cette loi de pilotage secondaire en vitesse sol ne proposant pas de coordination de virage automatique et donc ne contrôlant pas lors de chaque virage une vitesse latérale à réaliser de l'aéronef par rapport au sol de l'aéronef selon une direction latérale présente dans un plan horizontal perpendiculaire à la pesanteur, ladite direction latérale étant perpendiculaire au cap suivi.

Dès lors, le procédé peut comporter les étapes suivantes :

- à partir de chaque valeur prédite et de chaque valeur mesurée, calcul avec une unité de filtrage appliquant un algorithme de Kalman d'une valeur estimée d'un paramètre associé à une valeur prédite et estimation d'au moins une marge de précision de mesure d'un paramètre associé à une valeur prédite,

- comparaison de chaque marge de précision de vitesse avec un seuil dit « seuil de vitesse », ladite loi de pilotage secondaire en vitesse sol ne pouvant être appliquée que si au moins une marge de précision de vitesse est supérieure ou égale au seuil de vitesse.

Un tel seuil de vitesse est favorablement égal à 2 noeuds.

L'expression « ne pouvant être appliquée » signifie que la condition correspondante est une condition nécessaire, mais pas obligatoirement suffisante.

En situation nominale, les composantes de la vitesse sol sont fournies par le système de mesure principal et le système de mesure secondaire. Dans ces conditions, un filtre de Kalman appliqué par l'unité de filtrage permet d'estimer précisément les erreurs du système de mesure principal. Une loi de pilotage principal en vitesse sol permettant de tenir un objectif de vitesse sol est proposée au pilote.

Le filtre de Kalman produit une estimation des marges de précision des paramètres évalués via l'application d'une équation de Riccati embarquant un modèle d'erreur du système de mesure principal, y compris suite à la perte d'informations provenant du système de mesure secondaire. En cas de perte d'informations provenant du système de mesure secondaire, les mesures effectuées par le système de mesure principal ne sont plus totalement compensées de leurs erreurs. Ces erreurs croissent progressivement, plus ou moins lentement en fonction de la nature du système de mesure principal et de la trajectoire suivie. Toutefois, l'hybridation réalisée avec le filtre de Kalman préalablement à la perte des informations provenant du système de mesure secondaire permet de ralentir la croissance des erreurs pendant un certain temps.

De plus, l'unité de filtrage permet aussi via l'estimation de la marge de précision de mesure des paramètres surveillés de savoir à quel moment commuter de loi de pilotage à partir de seuils prédéfinis. Plus la trajectoire est dynamique, plus la commutation interviendra rapidement car ces marges de précision de mesure dépendent elles-mêmes de la trajectoire suivie.

En l'occurrence, tant que les données transmises par le système de mesure secondaire sont disponibles, les marges de précision de mesure sont inférieures aux seuils correspondants. La loi de pilotage principale en vitesse sol est alors appliquée.

Le système de pilotage automatique contrôle alors correctement l'aéronef, par exemple en maintenant une vitesse latérale sensiblement nulle lors des virages.

En cas de perte des données transmises par le système de mesure secondaire, la mesure des composantes de la vitesse sol est de fait entachée d'une certaine erreur.

En l'absence de l'invention, le système de pilotage automatique ne pilote plus correctement l'aéronef puisqu'un paramètre de la loi de pilotage appliquée n'est pas correctement mesuré. Par exemple, l'aéronef n'évolue plus à une vitesse latérale nulle lors des virages. Le pilote doit alors intervenir manuellement pour maintenir la trajectoire désirée notamment en virage. L'action du pilote doit être d'autant plus dynamique que le taux de virage est fort, d'où une augmentation de la charge de travail de pilotage dans ces conditions.

Selon l'invention, une marge de précision de vitesse d'au moins une composante de la vitesse sol estimée va au contraire dépasser le seuil de vitesse prédéfini en cas de perte des données transmises par le système de mesure secondaire.

Dès lors, une commutation vers la loi de pilotage secondaire en vitesse sol a automatiquement lieu. Par suite, le terme de coordination de virage de la loi de pilotage principale en vitesse sol est inhibé. La conséquence de cette commutation est une augmentation de la charge de travail d'un pilote pour réaliser un virage, mais en contrepartie le pilote s'affranchit totalement des erreurs de trajectoire non prévisibles résultant de l'utilisation d'une vitesse mal estimée.

Par ailleurs, une loi de pilotage dégradée peut être une loi de pilotage de tenue des attitudes qui génère un ordre donné à au moins un actionneur pour tenir un objectif d'assiette de l'aéronef.

Un objectif d'assiette peut prendre la forme d'un objectif assigné à un angle de roulis de l'aéronef et/ou à un angle de tangage de l'aéronef.

Ainsi, le procédé peut présenter les étapes suivantes :

- calcul avec l'unité de filtrage de composantes d'une accélération estimée de l'aéronef et d'au moins une marge de précision de mesure, ladite au moins une marge de précision de mesure comprenant une marge de précision d'accélération pour chaque composante de cette accélération estimée de l'aéronef,

- comparaison de chaque marge de précision d'accélération avec un seuil dit « seuil d'accélération », ladite loi de pilotage de tenue des attitudes ne pouvant être appliquée que si au moins une marge de précision d'accélération est supérieure ou égale au seuil d'accélération.

Le seuil d'accélération est par exemple égal à un millième de la gravité terrestre.

Une erreur relative à une composante de la vitesse sol est associée à une certaine vitesse de dérive, ce qui correspond à une erreur d'une composante d'une accélération de l'aéronef.

Cette erreur d'une composante d'une accélération peut selon la demanderesse poser un problème pour le contrôle de l'aéronef en situation stationnaire. Lors de la mise en oeuvre d'une loi de pilotage en vitesse sol, une variation d'une accélération de l'ordre de 0.5 millième de la pesanteur induit une charge de travail de pilotage significative pour compenser l'effet parasite de cette variation sur la position de l'aéronef dans l'espace.

Par suite, le procédé propose une deuxième commutation automatique vers une loi de pilotage de tenue des attitudes au-delà d'une erreur d'accélération, et donc lorsqu'une marge de précision d'accélération est supérieure ou égale au seuil d'accélération. En effet, une erreur d'accélération de 1 mg (un millième de l'accélération de la pesanteur) représente un équivalent d'erreur d'attitude de 1 mrad (milliradian), soit 0.057 deg. Cette erreur d'attitude n'a qu'une conséquence quasi-imperceptible sur l'assiette tenue avec une loi de pilotage en attitude. Par suite, l'application d'une loi de pilotage de tenue des attitudes a du sens.

Par ailleurs, dans le cadre d'un système de mesure principal de type unité de mesure inertielle, chaque gyromètre appartient à une classe de gyromètre ayant une précision d'au moins 0.1 deg/h (degré par heure).

Cette réalisation fait intervenir des capteurs inertiels robustes d'une classe meilleure que 10 Nm/h (mile nautique par heure) avec un gyromètre de précision au moins égale à 0.1 deg/h. De plus, la sensibilité des capteurs inertiels à la dynamique potentiellement importante de l'aéronef est favorablement la plus faible possible. En termes de spécifications des capteurs inertiels, cette contrainte signifie que le facteur d'échelle des gyromètres ainsi que la non-orthogonalité inter-axes des capteurs doivent être faibles.

Par suite, une autre commutation dépendant par exemple d'un seuil d'erreur d'assiette peut alors ne pas être nécessaire. En effet, la loi de pilotage de tenue des attitudes présente, avec de tels capteurs inertiels, une robustesse notable aux erreurs d'assiette et de vitesse angulaire. Dès lors, la loi de pilotage de tenue des attitudes induit des erreurs de pilotage négligeables en raison de la précision des capteurs inertiels.

Toutefois, une loi de pilotage dégradée peut être une loi de pilotage de tenue de vitesse angulaire qui génère un ordre donné à au moins un actionneur pour réaliser un objectif de vitesse angulaire de l'aéronef en utilisant uniquement des composantes d'une vitesse angulaire de l'aéronef.

Le verbe « réaliser » signifie que le loi de pilotage de tenue de vitesse angulaire vise à permettre à l'aéronef d'atteindre un objectif de vitesse angulaire.

Une telle loi de pilotage peut être intéressante lorsque des capteurs inertiels moins précis sont utilisés.

Dès lors, le procédé présente les étapes suivantes :

- calcul avec l'unité de filtrage d'un angle d'attitude en roulis et d'un angle d'attitude en tangage estimés de l'aéronef et d'au moins une marge de précision de mesure, ladite au moins une marge de précision de mesure comprenant une marge de précision d'angle de roulis et une marge de précision d'angle de tangage,

- comparaison de la marge de précision d'angle de roulis et de la marge de précision d'angle de tangage avec un seuil dit « seuil angulaire », ladite loi de pilotage de vitesse angulaire ne pouvant être appliquée que si au moins une desdites marge de précision d'angle de roulis et d'angle de tangage est supérieure ou égale au seuil angulaire.

Cet écart d'attitude peut être égal à une valeur comprise entre 3 et 5 degrés.

En ce qui concerne les capteurs inertiels, d'autres classes inertielles que celles précédemment mentionnées sont envisageables.

Si une meilleure classe inertielle des gyromètres est adoptée, 0.01 deg/h par exemple, une loi de pilotage de tenue d'attitude voire même la loi de pilotage secondaire en vitesse sol peut être inutile.

Par contre, si une moins bonne inertie des gyromètres est choisie, d'une classe supérieure à 1 deg/h, le niveau d'assistance sera dégradé d'une manière moins continue que dans la solution décrite précédemment. En effet, la commutation automatique ferait rapidement passer le système de pilotage automatique d'une loi de pilotage en vitesse sol vers une loi de pilotage de tenue des attitudes. La loi de pilotage de tenue des attitudes présente une robustesse limitée vis-à-vis d'erreurs importantes sur les angles de roulis et de tangage. Typiquement, la demanderesse note que le niveau d'erreur maximum admissible pour le pilotage se situe entre 3 et 5 degrés d'erreurs en roulis ou en tangage. Au-delà, le pilote éprouve des difficultés pour compenser manuellement les mouvements de l'aéronef résultant des erreurs de mesure.

De ce fait, si la classe inertielle des capteurs inertiels utilisés est susceptible de dépasser ce niveau d'erreur, alors l'invention propose une commutation vers une loi de pilotage de vitesse angulaire utilisant uniquement des informations de vitesse angulaire.

En l'absence de loi de pilotage de vitesse angulaire, le procédé peut alors présenter les étapes suivantes :

- commande d'un actionneur en appliquant la loi de pilotage par défaut tant que chaque marge de précision de mesure est inférieure au seuil correspondant,

- commande de l'actionneur en appliquant la loi de pilotage secondaire en vitesse sol que si au moins une marge de précision de vitesse est supérieure ou égale au seuil de vitesse et si aucune marge de précision d'accélération n'est supérieure ou égale au seuil d'accélération.

- commande de l'actionneur en appliquant ladite loi de pilotage de tenue des attitudes si au moins une marge de précision d'accélération est supérieure ou égale au seuil d'accélération.

Par contre et en présence d'une loi de pilotage de vitesse angulaire, le procédé peut alors présenter les étapes suivantes :

- commande d'un actionneur en appliquant la loi de pilotage par défaut tant que chaque marge de précision de mesure est inférieure au seuil correspondant,

- commande de l'actionneur en appliquant la loi de pilotage secondaire en vitesse sol que si au moins une marge de précision de vitesse est supérieure ou égale au seuil de vitesse et si aucune marge de précision d'accélération est supérieure ou égale au seuil d'accélération et si aucune desdites valeurs de précision d'angle de roulis et d'angle de tangage est supérieure ou égale au seuil angulaire,

- commande de l'actionneur en appliquant ladite loi de pilotage de tenue des attitudes si au moins une marge de précision d'accélération est supérieure ou égale au seuil d'accélération et si aucune desdites valeurs de précision d'angle de roulis et d'angle de tangage est supérieure ou égale au seuil angulaire,

- commande dudit actionneur en appliquant la loi de pilotage de vitesse angulaire si au moins une desdites marge de précision d'angle de roulis et d'angle de tangage est supérieure ou égale au seuil angulaire.

Outre un procédé, l'invention vise un dispositif d'aide au pilotage d'un aéronef configuré pour appliquer ce procédé.

L'invention vise ainsi un dispositif d'aide au pilotage d'un aéronef, cet aéronef comprenant au moins un actionneur agissant sur un organe de contrôle permettant de contrôler la position de l'aéronef dans l'espace, le dispositif d'aide au pilotage comprenant un module de pilotage automatique stockant au moins deux lois de pilotage pouvant chacune être appliquée pour générer un ordre transmis à au moins un actionneur, le dispositif d'aide au pilotage comprenant un système de mesure principal et un système de mesure secondaire qui déterminent respectivement au moins une valeur dite « valeur prédite » et au moins une valeur dite « valeur mesurée » d'un paramètre utilisé dans une des lois de pilotage dénommée « loi de pilotage par défaut ».

Ce dispositif d'aide au pilotage comporte une unité de filtrage reliée au module de pilotage automatique ainsi qu'au système de mesure principal et au système de mesure secondaire, l'unité de filtrage appliquant un algorithme de Kalman pour mettre en oeuvre le procédé décrit précédemment.

Enfin, l'invention vise un aéronef comprenant au moins un actionneur agissant sur un organe de contrôle permettant de contrôler la position de l'aéronef dans l'espace,

Cet aéronef comporte un dispositif d'aide au pilotage du type décrit précédemment.

L'invention et ses avantages apparaîtront avec plus de détails dans le cadre de la description qui suit avec des exemples donnés à titre illustratif en référence aux figures annexées qui représentent :

- la figure 1, une vue d'un aéronef selon l'invention,

- les figures 2 et 3, des schémas présentant des exemples de réalisation d'un système de mesure secondaire,

- les figures 4 à 6, des schémas présentant des exemples de réalisation d'un système de mesure principal,

- les figures 7 à 9, des schémas explicitant le procédé selon l'invention, et

- la figure 10 un schéma présentant divers angles d'un aéronef,

- la figure 11, un schéma illustrant une direction latérale d'un aéronef.

Les éléments présents dans plusieurs figures distinctes sont affectés d'une seule et même référence.

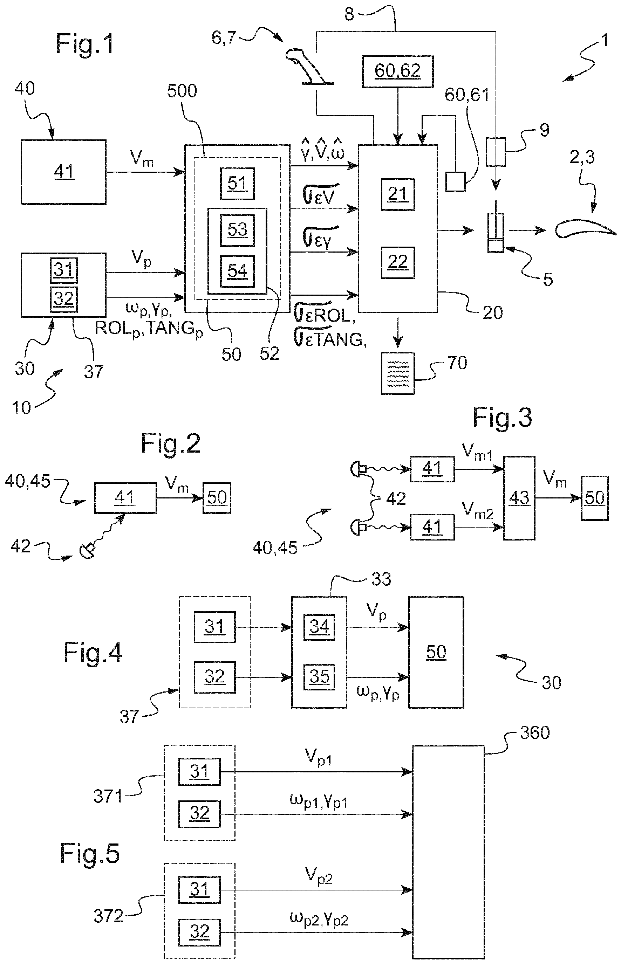

La figure 1 présente un aéronef 1 selon l'invention.

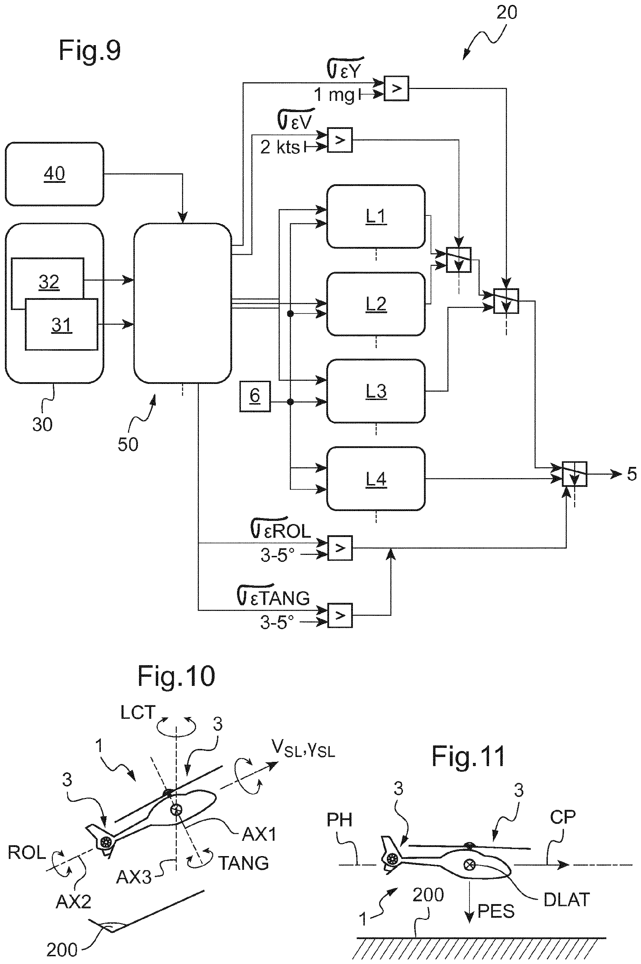

En référence à la figure 10, cet aéronef peut être un giravion muni de rotors 3. En particulier, le giravion peut comporter au moins un rotor participant au moins partiellement à la sustentation voire à la propulsion de l'aéronef, voire au moins un rotor participant au contrôle du mouvement en lacet de cet aéronef.

A chaque instant, l'aéronef 1 présente un angle de tangage TANG autour d'un axe de tangage AX1, un angle de roulis ROL autour d'un axe de roulis AX2 et un angle de lacet LCT autour d'un axe de lacet AX3.

De plus, cet aéronef 1 se déplace par rapport au sol 200 avec une vitesse dite « vitesse sol Vsl » et une accélération ysl. La vitesse sol et l'accélération présentent trois composantes dans le référentiel terrestre, à savoir une composante latérale ainsi qu'une composante longitudinale et une composante en élévation dites respectivement « EAST », « NORTH », « DOWN » en langue anglaise.

En référence à la figure 11, l'aéronef peut présenter une vitesse dite « vitesse latérale » par rapport au sol 200. La vitesse latérale représente une projection du vecteur vitesse Vsl de l'aéronef 1 selon une direction latérale DLAT, cette direction latérale étant présente dans un plan horizontal PH perpendiculaire à la pesanteur PES et étant perpendiculaire au cap CP suivi.

En référence à la figure 1, l'aéronef 1 comporte des organes de contrôle 2 permettant de contrôler la position de l'aéronef dans l'espace. Par exemple, des tels organes de contrôle incluent les pales d'un rotor 3 d'un giravion.

Pour mouvoir ces organes de contrôle 2, l'aéronef comporte des actionneurs 5. Ces actionneurs 5 peuvent prendre la forme de vérins électriques ou pneumatiques ou hydrauliques, de moteurs électriques...

Les actionneurs 5 peuvent être contrôlés par un pilote à l'aide de commandes de vol 6. Par exemple, des commandes de vol d'un hélicoptère peuvent comprendre un manche dit « manche de commande de pas cyclique 7 », un levier dit « levier de pas collectif », un palonnier, un clavier permettant de saisir un objectif...

Dans une architecture purement mécanique, chaque commande de vol est reliée à un actionneur 5 par une chaîne mécanique 8. Dans une architecture au moins partiellement électrique, chaque commande de vol peut générer un ordre transmis par une liaison filaire ou non filaire à un actionneur.

Par ailleurs, l'aéronef 1 comporte un dispositif d'aide au pilotage 10.

Ce dispositif d'aide au pilotage 10 inclut un module de pilotage automatique 20. Le module de pilotage automatique 20 peut comprendre par exemple un processeur, un circuit intégré, un système programmable, un circuit logique, ces exemples ne limitant pas la portée donnée à l'expression « module de pilotage automatique ».

Par exemple, le module de pilotage automatique 20 peut comprendre un calculateur 21 prenant la forme d'un processeur ou équivalent et une unité de mémoire 22. Cette unité de mémoire 22 peut posséder une mémoire non volatile mémorisant des informations non modifiables et une mémoire volatile apte à stocker des valeurs de variables qui varient dans le temps.

En particulier, des lois de pilotage L1, L2, L3, L4 peuvent être appliquées par le module de pilotage automatique 20. Dès lors, ces lois de pilotage peuvent être mémorisées dans la mémoire non volatile.

Chaque loi de pilotage permet au module de pilotage automatique de générer un ordre donné à au moins un actionneur 5. Dans une architecture purement mécanique, le module de pilotage automatique peut à cet effet commander un vérin 9 relié à une chaîne mécanique 8. Dans une architecture au moins partiellement électrique, le module de pilotage automatique 20 peut générer un ordre transmis par une liaison filaire ou non filaire à un actionneur 5.

Les lois de pilotage incluent une loi de pilotage par défaut.

Cette loi de pilotage par défaut peut être une loi dénommée « loi de pilotage principale en vitesse sol L1 ». L'application de cette loi de pilotage principale en vitesse sol L1 permet de transmettre un ordre à au moins un actionneur 5 pour tenir un objectif de vitesse sol. Cette loi de pilotage principale en vitesse sol impose le maintien d'une vitesse latérale particulière en virage dite « vitesse latérale à réaliser ».

Par défaut, la vitesse latérale à réaliser est par exemple nulle mais peut être modifiée par un pilote.

De plus, les lois de pilotage automatique incluent au moins une loi de pilotage dégradée.

Une loi de pilotage dégradée est dite « loi de pilotage secondaire en vitesse sol L2 ». La loi de pilotage secondaire en vitesse sol L2 permet de générer un ordre transmis à au moins un actionneur 5 pour tenir un objectif de vitesse sol. Toutefois, la loi de pilotage secondaire en vitesse sol ne vise pas à maintenir une vitesse latérale à réaliser en virage contrairement à la loi de pilotage principale en vitesse sol L1.

Le manche de commande de pas cyclique est par exemple manoeuvré par un pilote pour transmettre un objectif de vitesse sol, la loi de pilotage principale en vitesse sol L1 ou la loi de pilotage secondaire en vitesse sol L2 générant un ordre pour tendre à atteindre cet objectif.

Une autre loi de pilotage dégradée est dite « loi de pilotage de tenue des attitudes L3 ». La loi de pilotage de tenue des attitudes L3 génère un ordre transmis à au moins un actionneur 5 pour tenir un objectif d'assiette de l'aéronef 1.

Dès lors, la loi de pilotage de tenue des attitudes L3 permet de tenir un objectif d'angle de roulis ROL et/ ou un objectif d'angle de tangage TANG.

Le manche de commande de pas cyclique est par exemple manoeuvré par un pilote pour transmettre un objectif d'angle de roulis ROL et/ ou d'angle de tangage TANG, la loi de pilotage de tenue des attitudes L3 générant un ordre pour tendre à atteindre cet objectif.

Une autre loi de pilotage dégradée est dite « loi de pilotage de tenue de vitesse angulaire L4 ». La loi de pilotage de tenue de vitesse angulaire L4 génère un ordre transmis à au moins un actionneur 5 pour tenir un objectif de vitesse angulaire de l'aéronef 1 en utilisant uniquement des composantes d'une vitesse angulaire de l'aéronef 1. Le manche de commande de pas cyclique est par exemple manoeuvré par un pilote pour transmettre un objectif de vitesse angulaire, la loi de pilotage de tenue de vitesse angulaire générant un ordre pour tendre à atteindre cet objectif.

Par exemple, la loi de pilotage de tenue de vitesse angulaire L4 vise à tenir une vitesse angulaire nulle lorsque le pilote ne donne pas d'ordre de pilotage, et génère un objectif de vitesse angulaire lorsque le pilote manoeuvre une commande de vol.

Dès lors, lorsque le dispositif d'aide au pilotage 10 est activé par des moyens usuels non représentés, le module de pilotage automatique 20 détermine la loi de pilotage adéquate, puis commande chaque actionneur en utilisant cette loi de pilotage adéquate pour chaque actionneur.

Le module de pilotage automatique 20 peut être relié à un moyen d'alerte 70 pour indiquer à un pilote la loi de pilotage appliquée. Un tel moyen d'alerte 70 peut posséder un écran ou équivalent signalant par écrit la loi de pilotage appliquée, une enceinte indiquant de manière sonore la loi de pilotage appliquée, ou encore un organe indiquant tactilement à un pilote la loi de pilotage appliquée. Par exemple, une commande de vol peut vibrer de manière différente en fonction de la loi appliquée.

Pour mettre en oeuvre une loi de pilotage, le module de pilotage automatique 20 est relié à de multiples organes.

Ainsi, le module de pilotage automatique 20 peut être relié à des commandes de vol 6 qui permettent à un pilote de fixer un objectif à atteindre. La loi de pilotage permet alors d'établir les ordres à donner aux actionneurs en fonction de l'objectif à atteindre et de l'état courant de l'aéronef.

De plus, le module de pilotage automatique 20 peut être relié à des capteurs 60 divers pour estimer cet état courant. Ces capteurs 60 peuvent inclure des capteurs 61 permettant d'établir l'état courant d'un actionneur, tel qu'un capteur mesurant la position d'un organe de l'actionneur. Ces capteurs 60 peuvent aussi comprendre des moyens 62 qui mesurent des valeurs de paramètres courant de l'aéronef comme ses vitesses angulaires, ses assiettes ou ses facteurs de charge.

Par ailleurs, pour déterminer la loi de pilotage adéquate, le module de pilotage automatique compare des marges de précision de mesure de certains paramètres à des seuils mémorisés.

Le dispositif d'aide au pilotage 10 possède un sous-ensemble de traitement permettant d'estimer la valeur de ces paramètres et les marges de précision de mesure correspondantes.

Ce sous-ensemble de traitement inclut un système de mesure principal 30 et un système de mesure secondaire 40 qui déterminent respectivement au moins une valeur dite « valeur prédite » et au moins une valeur dite « valeur mesurée » d'au moins un paramètre utilisé dans au moins une des lois de pilotage.

Le système de mesure principal 30 est qualifié de « principal » dans la mesure où ce système de mesure principal 30 fournit en permanence les mesures requises, bien que parfois entachées d'erreurs. En raison de ces erreurs, les mesures effectuées par le système de mesure principal 30 sont qualifiées de « valeurs prédites ».

En référence à la figure 4, le système de mesure principal 30 peut notamment comprendre une pluralité de capteurs inertiels incluant des gyromètres 32 et des accéléromètres 31.

Ainsi, le système de mesure principal 30 peut posséder au moins une unité de mesure inertielle 37 munie de plusieurs gyromètres et de plusieurs accéléromètres. En particulier, une unité de mesure inertielle 37 peut comporter par exemple trois gyromètres 32 disposés respectivement selon des axes orthogonaux entre eux, et trois d'accéléromètres 31 disposés respectivement selon des axes orthogonaux entre eux.

Chaque gyromètre 32 appartient éventuellement à une classe de gyromètres ayant une précision d'au moins 0.1 deg/h.

Une telle unité de mesure inertielle peut être une partie d'une centrale inertielle.

Par exemple, les gyromètres 32 et les accéléromètres 31 sont reliés à un organe dénommé usuellement « plateforme virtuelle 33 » Cette plateforme virtuelle 33 peut comporter un processeur, un circuit intégré, un système programmable, un circuit logique, ces exemples ne limitant pas la portée donnée à l'expression « plateforme virtuelle ». Par exemple, la plateforme virtuelle comporte un processeur 34 exécutant des instructions mémorisées dans une mémoire 35.

La plateforme virtuelle détermine, par intégration des mesures des gyromètres, l'attitude de l'aéronef à un instant de calcul. De plus, par intégration des mesures des accéléromètres, qui peuvent être rapportées à un référentiel terrestre extérieur à l'aéronef grâce à la connaissance de l'attitude de l'aéronef, la plateforme virtuelle détermine les valeurs prédites Vp des trois composantes de la vitesse sol de l'aéronef dans le référentiel terrestre.

Selon l'exemple de la figure 4, une seule unité de mesure inertielle est utilisée.

Selon l'exemple de la figure 5, le dispositif d'aide au pilotage peut comporter plusieurs unités de mesure inertielles 371, 372. Chaque unité de mesure inertielle 371, 372 communique avec une plateforme de calcul 360 permettant notamment d'effectuer un filtrage. Par exemple, une première unité de mesure inertielle 371, et une deuxième unité de mesure inertielle 372 transmettent à la plateforme de calcul une première valeur prédite Vp1 et une deuxième valeur prédite Vp2 pour chaque composante de la vitesse sol, ainsi qu'une première valeur prédite ωp1 et une deuxième valeur prédite ωp2 pour chaque composante de la vitesse angulaire, puis une première valeur prédite yp1 et une deuxième valeur prédite yp2 pour chaque composante de l'accélération de l'aéronef.

Indépendamment de la réalisation, le système de mesure primaire permet de déterminer des valeurs prédites Vp de chaque composante de la vitesse sol de l'aéronef, des valeurs prédites γp de chaque composante de l'accélération de l'aéronef, et des valeurs prédites ωp de chaque composante de la vitesse angulaire de l'aéronef. De même, le système de mesure primaire permet de déterminer des valeurs prédites d'un angle de tangage TANGp ainsi que d'un angle de roulis ROLp et d'un angle de cap de l'aéronef.

Par ailleurs et en référence à la figure 2, le système de mesure secondaire 40 est qualifié de « secondaire » dans la mesure où ce système de mesure secondaire 40 ne fournit pas en permanence les mesures requises. Néanmoins, lorsque le système de mesure secondaire 40 fonctionne, ce système de mesure secondaire 40 fournit des valeurs précises qui sont dès lors qualifiées de « valeurs mesurées ».

Le système de mesure secondaire 40 peut comporter un moyen de détection d'objet émettant un signal de détection susceptible de revenir vers le moyen de détection d'objet suite à un impact avec un objet, tel qu'un système LIDAR ou RADAR.

Toutefois, le système de mesure secondaire 40 peut comporter un moyen de positionnement par satellites 45.

Par suite, l'aéronef est porteur d'au moins un moyen de réception satellitaire 41 apte à communiquer avec une constellation de satellites 42.

Selon la figure 2, un seul moyen de réception satellitaire 41 permet de déterminer les valeurs mesurées des composantes de la vitesse sol de l'aéronef.

Selon la figure 3, l'aéronef porte plusieurs moyens de réception satellitaire 41. Chaque moyen de réception satellitaire 41 communique avec sa propre constellation de satellites 42.

Par suite, une unité de consolidation 43 est reliée à chaque moyen de réception satellitaire 41. Ainsi, chaque moyen de réception satellitaire 41 détermine les valeurs mesurées Vm1, Vm2 des composantes de la vitesse sol de l'aéronef. L'unité de consolidation 43 en déduit alors une valeur mesurée consolidée Vm des composantes de la vitesse sol de l'aéronef, par exemple en appliquant un algorithme de la médiane. Une telle unité de consolidation peut prendre la forme d'un calculateur ou être intégrée dans un calculateur

Il est à noter que l'enseignement du document déposé le 11 décembre 2014 auprès de l'Institut National de la Propriété Industrielle en France sous la référence 14 02824 peut être utilisé pour consolider des données.

En référence à la figure 1, les valeurs prédites Vp, γp, ωp, ROLp, TANGp et mesurées Vm sont transmises à une unité de filtrage 50 du sous-ensemble de traitement.

Cette unité de filtrage comporte au moins un module de filtrage 500 qui applique un algorithme de Kalman. Un tel module de filtrage 500 peut comprendre par exemple un processeur, un circuit intégré, un système programmable, un circuit logique, ces exemples ne limitant pas la portée donnée à l'expression « module de filtrage».

Par exemple, le module de filtrage 500 peut comprendre un calculateur 51 prenant la forme d'un processeur ou équivalent et une unité de mémoire 52. Cette unité de mémoire 52 peut posséder une mémoire non volatile 53 mémorisant des informations non modifiables et une mémoire volatile 54 apte à stocker des valeurs de variables qui varient dans le temps.

Pour appliquer un algorithme de Kalman, les équations usuelles d'un filtre de Kalman sont mémorisées, tel que l'équation de Riccati par exemple qui permet de calculer la covariance des erreurs d'estimation.

De plus, un modèle d'erreur est mémorisé. Ce modèle d'erreur inclut une pluralité d'états qui représentent les défauts des gyromètres et des accéléromètres, ainsi que leurs conséquences sur l'horizontalité et la verticalité de la plateforme inertielle. Typiquement, ces états incluent les biais des gyromètres selon les axes porteurs de ces gyromètres, les biais des accéléromètres selon les axes porteurs, une erreur d'attitude de la plateforme inertielle par rapport aux vrais axes géographiques, une erreur de chaque composante de la vitesse sol résultant des erreurs des gyromètres via une double intégration et des erreurs des accéléromètres via une intégration.

L'algorithme de Kalman permet d'hybrider les données provenant du système de mesure principal 30 et du système de mesure secondaire 40.

Dès lors, cet algorithme de Kalman permet de déterminer des valeurs estimées des composantes de la vitesse sol $\hat{V}$, des composantes de l'accélération $\hat{\gamma}$, des composantes de la vitesse angulaire $\hat{\omega}$, de l'angle de roulis $\widehat{ROL}$ et de l'angle de tangage $\widehat{TANG}$.

De plus, cet algorithme de Kalman permet de déterminer des marges de précision de mesure pour chacun de ces paramètres.

Ainsi, cet algorithme de Kalman permet notamment de déterminer une marge de précision de vitesse $\sigma_{\varepsilon V}$ pour chaque composante estimée de la vitesse sol, une marge de précision d'accélération $\sigma_{\varepsilon \gamma}$ pour chaque composante estimée de l'accélération de l'aéronef, une marge de précision d'angle de roulis $\sigma_{\varepsilon ROL}$ pour l'angle de roulis estimé de l'aéronef et une marge de précision d'angle de tangage $\sigma_{\varepsilon TANG}$ pour l'angle de tangage estimé de l'aéronef.

Les données alimentant le module de filtrage proviennent donc du système de mesure principal 30 et du système de mesure secondaire 40.

Tant que les données du système de mesure secondaire 40 sont présentes, les états estimés en temps réel sont utilisés pour compenser les erreurs des capteurs inertiels du système de mesure secondaire 40. L'estimation des états s'accompagne d'une estimation de leur covariance et de leur marge de précision, via l'équation de Riccati. Cette équation de Riccati est alimentée par les données délivrées par les gyromètres et les accéléromètres et d'une information de perte ou de présence des composantes de la vitesse sol fournie par le système de mesure secondaire 40.

Chaque marge de précision peut être égale à la racine carrée d'un terme présent sur la diagonale de la matrice de covariance.

Même en cas de perte des valeurs des composantes de la vitesse sol fournies par le système de mesure secondaire 40, les marges de précision et les valeurs estimées continuent d'être estimées en boucle ouverte, c'est-à-dire en l'absence de valeurs mesurées de la vitesse sol. Néanmoins, les marges de précision vont alors augmenter, et ce d'autant plus vite que la trajectoire du porteur est dynamique. Cette dépendance des marges de précision vis-à-vis de la trajectoire est prise en compte dans l'équation de Riccati via les données délivrées par les gyromètres et les accéléromètres.

Ces marges de précision sont alors utilisées selon le procédé de l'invention pour déterminer la loi de pilotage à appliquer à chaque instant.

Par suite, les données estimées par le module de filtrage sont transmises au module de pilotage automatique 20.

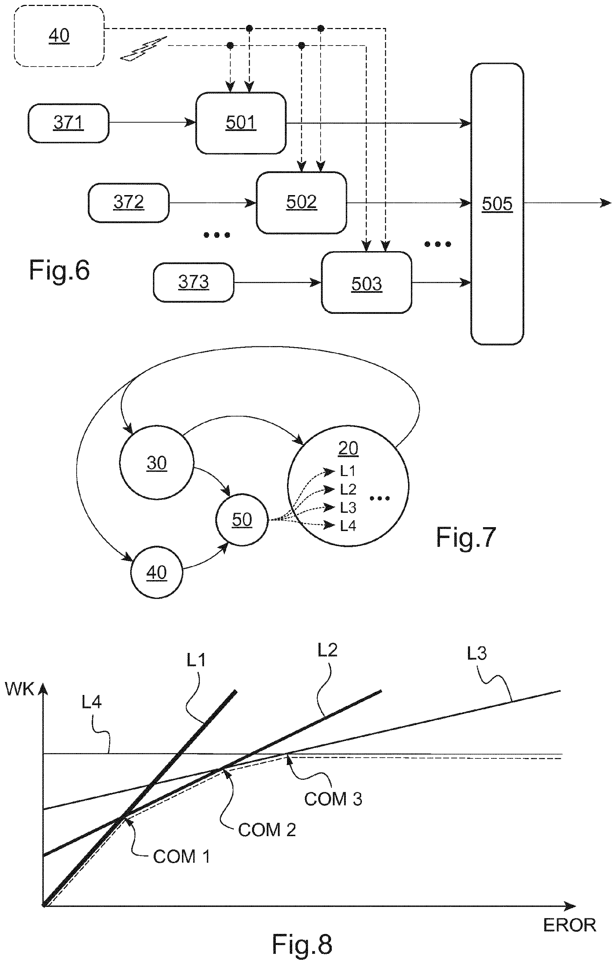

En référence à la figure 6, l'unité de filtrage peut comporter une pluralité de modules de filtrage 501, 502, 503. Par exemple, l'unité de filtrage comporte un module de filtrage par unité de mesure inertielle 371, 372, 373.

Les données estimées par chaque module de filtrage sont alors transmises à un moyen de consolidation 505, tel qu'un moyen de consolidation du type décrit précédemment.

Par exemple, le moyen de consolidation 505 applique un algorithme de la médiane pour réaliser une surveillance des marges de précision de chaque variable d'intérêt (par exemple de vitesse et d'accélération) calculées avec les données de plusieurs unités de mesure inertielle 371, 372, 373, avant la transmission de marges de précision consolidées, ainsi déclarées intègres, vers le module de pilotage automatique. Si une marge de précision sort d'un seuil prédéfini par rapport à la valeur médiane entre toutes les valeurs de tous les modules de filtrage 501, 502, 503, alors si la redondance est suffisante, le système se reconfigure automatiquement pour écarter automatiquement la valeur défectueuse. Si la redondance des unités de mesure inertielle 371, 372, 373 ne le permet pas, alors la loi de pilotage la plus dégradée (c'est-à-dire celle ne nécessitant aucun paramètre dont la marge de précision est déclarée non intègre) est automatiquement sélectionnée par le dispositif.

Les figures 7 à 9 illustrent le procédé de l'invention.

En référence à la figure 7, l'invention associe un système de mesure principal 30 fournissant des données à un système de mesure secondaire 40 permettant d'identifier de manière continue les défauts du système de mesure principal 30 par l'intermédiaire d'une unité de filtrage 50.

Les erreurs du système de mesure principal 30 induisent des marges de précision de mesure qui sont estimées par l'unité de filtrage 50.

Le module de pilotage automatique 20 détermine alors la loi de pilotage à appliquer en fonction de ces marges de précision. Lorsqu'un moyen de consolidation 505 est utilisé en aval de l'unité de filtrage, le moyen de consolidation 505 peut déterminer si les marges de précision d'une variable déterminées par chaque module de filtrage sont sensiblement égales.

En effet, ces différentes marges de précision d'une même variable sont censées être identiques en l'absence de panne de capteurs car les marges de précision ne dépendent que de la trajectoire et de la classe inertielle des capteurs. Le moyen de consolidation 505 permet donc de discréditer automatiquement les marges de précision erronées si la redondance des capteurs est suffisante. Dans la négative, une réversion automatique vers la loi de pilotage la plus dégradée est provoquée s'il y a une indétermination sur la localisation de l'erreur.

La figure 8 illustre l'intérêt de l'invention.

Cette figure 8 présente un diagramme présentant la charge de travail WK d'un pilote en ordonnée, et les erreurs EROR du système de mesure principal 30 en abscisse.

De plus, les lois de pilotage principale en vitesse sol L1, secondaire en vitesse sol L2, de tenue des attitudes L3 et de tenue de vitesse angulaire L4 sont schématisées.

On comprend que la commutation COM1, COM2, COM3 entre deux lois de pilotage réalisée au moment adéquat permet d'optimiser la charge de travail d'un pilote.

Dans un premier temps, la loi de pilotage principale en vitesse sol L1 est par exemple appliquée. A partir d'un instant donné, le module de pilotage automatique réalise automatiquement une première commutation COM1 pour appliquer la loi de pilotage secondaire en vitesse sol L2. Les erreurs du système de mesure principal 30 continuent alors d'augmenter ce qui induit une deuxième commutation COM 2 vers la loi de pilotage de tenue des attitudes L3. Eventuellement, une troisième commutation COM3 peut induire ultérieurement la mise en oeuvre automatique de la loi de pilotage de tenue de vitesse angulaire L4.

La figure 9 permet d'illustrer plus précisément le procédé appliqué par le dispositif d'aide au pilotage 10.

En référence à la figure 9, le système de mesure principal 30 détermine les valeurs prédites de paramètres, et notamment de chaque composante de la vitesse sol de l'aéronef, de chaque composante de l'accélération de l'aéronef, de chaque composante de la vitesse angulaire de l'aéronef, d'un angle de tangage TANGp ainsi que d'un angle de roulis ROLp de l'aéronef.

Le système de mesure secondaire 30 détermine des valeurs dites « valeurs mesurées » des composantes de la vitesse sol.

Dès lors, à partir de chaque valeur prédite et de chaque valeur mesurée, l'unité de filtrage détermine une valeur estimée d'au moins un paramètre mesuré par le système de mesure primaire, et estime au moins une marge de précision de mesure.

Notamment, l'unité de filtrage détermine des valeurs estimées des composantes de la vitesse sol $\hat{V}$, des composantes de l'accélération $\hat{\gamma}$, des composantes de la vitesse angulaire $\hat{\omega}$, de l'angle de roulis $\widehat{ROL}$ et de l'angle de tangage $\widehat{TANG}$ à partir des valeurs prédites et des valeurs mesurées reçues.

De plus, l'unité de filtrage détermine une marge de précision de vitesse $\sigma_{\varepsilon V}$ pour chaque composante estimée de la vitesse sol, une marge de précision d'accélération $\sigma_{\varepsilon \gamma}$ pour chaque composante estimée de l'accélération de l'aéronef, une marge de précision d'angle de roulis $\sigma_{\varepsilon ROL}$ pour l'angle de roulis estimé de l'aéronef et une marge de précision d'angle de tangage $\sigma_{\varepsilon TANG}$ pour l'angle de tangage estimé de l'aéronef.

Les diverses valeurs estimées et marges de précision de mesure estimées sont transmises au module de pilotage automatique.

Dès lors, le module de pilotage automatique compare les marges de précision de mesure avec un seuil correspondant.

Par suite, le module de pilotage automatique commande au moins un actionneur 5 en appliquant automatiquement la loi de pilotage par défaut L1 tant que chaque marge de précision de mesure est inférieure au seuil correspondant.

Par contre, le module de pilotage automatique commande au moins un actionneur 5 en appliquant automatiquement une loi de pilotage dégradée L2, L3, L4 lorsqu'au moins une marge de précision de mesure est supérieure ou égale au seuil correspondant.

En particulier, l'unité de filtrage compare une marge de précision de vitesse $\sigma_{\varepsilon V}$ pour chaque composante de la vitesse sol estimée de l'aéronef avec un seuil dit « seuil de vitesse ». Un tel seuil de vitesse peut être égal à 2 Kts (noeuds).

Par suite, la loi de pilotage secondaire en vitesse sol L2 ne peut être appliquée que si au moins une marge de précision de vitesse est supérieure ou égale au seuil de vitesse.

De plus, l'unité de filtrage compare chaque marge de précision d'accélération $\sigma_{\varepsilon \gamma}$ avec un seuil d'accélération, par exemple égal à un millième de la gravité terrestre.

Par suite, la loi de pilotage de tenue des attitudes ne peut être appliquée que si au moins une marge de précision d'accélération est supérieure ou égale au seuil d'accélération.

De plus, l'unité de filtrage peut comparer une marge de précision d'angle de roulis $\sigma_{\varepsilon ROL}$ et une marge de précision d'angle de tangage $\sigma_{\varepsilon TANG}$ à un seuil angulaire, par exemple compris entre 3 et 5 degrés.

Par suite, le module de pilotage automatique commande au moins un actionneur en appliquant la loi de pilotage par défaut tant que chaque marge de précision de mesure est inférieure au seuil correspondant,

Par contre, le module de pilotage automatique commande cet actionneur en appliquant la loi de pilotage secondaire en vitesse sol que si au moins une marge de précision de vitesse est supérieure ou égale au seuil de vitesse et si aucune marge de précision d'accélération n'est supérieure ou égale au seuil d'accélération voire si aucune desdites valeurs de précision d'angle de roulis et d'angle de tangage est supérieure ou égale au seuil angulaire.

De plus le module de pilotage automatique commande cet actionneur en appliquant ladite loi de pilotage de tenue des attitudes si au moins une marge de précision d'accélération est supérieure ou égale au seuil d'accélération, voire si aucune desdites valeurs de précision d'angle de roulis et d'angle de tangage est supérieure ou égale au seuil angulaire.

Enfin, le module de pilotage automatique commande un actionneur en appliquant la loi de pilotage de vitesse angulaire si au moins une desdites marges de précision d'angle de roulis et d'angle de tangage est supérieure ou égale au seuil angulaire.

Ce procédé permet donc de lisser la dégradation du niveau d'assistance au pilotage par commutations successives entre diverses lois de pilotage lorsque l'erreur estimée du système de mesure primaire dépasse certains seuils. Une variante de l'invention consiste à lisser les commutations elles-mêmes en limitant progressivement l'autorité de termes apportant un niveau d'assistance élevé, jusqu'à les annuler pour finaliser la commutation. Un exemple est la limitation progressive de l'assistance à la coordination de virage (qui dépend elle-même de la vitesse sol) en fonction de l'erreur de vitesse sol estimée, jusqu'à commuter effectivement vers une loi de pilotage secondaire en vitesse sol.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, l'aéronef peut comporter plusieurs actionneurs. Dès lors, deux actionneurs différents peuvent être associés à des jeux de lois de pilotage distincts, chaque jeu de loi de pilotage ayant une loi de pilotage par défaut et des lois de pilotage dégradées.

**Revendications**

1. Procédé d'aide au pilotage d'un aéronef (1) comprenant au moins un actionneur (5) agissant sur un organe de contrôle (2) qui permet de contrôler la position de l'aéronef (1) dans l'espace, ledit aéronef (1) mémorisant au moins deux lois de pilotage pouvant chacune être appliquée pour générer un ordre transmis à au moins un actionneur (5), ledit aéronef (1) comprenant un système de mesure principal (30) et un système de mesure secondaire (40) qui déterminent respectivement au moins une valeur dite « valeur prédite » et au moins une valeur dite « valeur mesurée » d'un paramètre utilisé dans une desdites lois de pilotage dénommée « loi de pilotage par défaut (L1) », chaque loi de pilotage distincte de la loi de pilotage par défaut étant dite « loi de pilotage dégradée (L2, L3, L4) », ledit procédé comportant l'étape suivante :

- à partir de chaque valeur prédite et de chaque valeur mesurée, calcul avec une unité de filtrage (50) appliquant un algorithme de Kalman d'une valeur estimée d'un paramètre associé à une valeur prédite et estimation d'au moins une marge de précision de mesure d'un paramètre associé à une valeur prédite,

**caractérisé en ce que** ledit procédé comporte les étapes suivantes :

- comparaison de la marge de précision de mesure avec un seuil correspondant,
- commande dudit actionneur (5) en appliquant automatiquement ladite loi de pilotage par défaut (L1) tant que chaque marge de précision de mesure est inférieure au seuil correspondant,
- commande dudit actionneur (5) en appliquant automatiquement une loi de pilotage dégradée (L2, L3, L4) lorsqu'au moins une marge de précision de mesure est supérieure ou égale au seuil correspondant.

2. Procédé selon la revendication 1,
**caractérisé en ce que** ledit procédé comporte une étape d'alerte durant laquelle une alerte est générée lorsqu'une loi de pilotage dégradée (L2, L3, L4) est appliquée.

3. Procédé selon l'une quelconque des revendications 1 à 2,
**caractérisé en ce que** ladite loi de pilotage par défaut est une loi de pilotage principale en vitesse sol (L1) qui génère un ordre donné à au moins un actionneur (5) pour tenir un objectif de vitesse sol.

4. Procédé selon la revendication 3,
**caractérisé en ce que** ladite loi de pilotage principale en vitesse sol impose lors de chaque virage une vitesse latérale à réaliser de l'aéronef (1) par rapport au sol (200) selon une direction latérale (DLAT) présente dans un plan horizontal (PH) perpendiculaire à la pesanteur (PES), ladite direction latérale (DLAT) étant perpendiculaire au cap (CP) suivi.

5. Procédé selon l'une quelconque des revendications 1 à 4,
**caractérisé en ce qu'**une loi de pilotage dégradée est une loi de pilotage secondaire en vitesse sol (L2) qui génère un ordre donné à au moins un actionneur (5) pour tenir un objectif de vitesse sol, ladite loi de pilotage secondaire en vitesse sol ne contrôlant pas lors de chaque virage une vitesse latérale à réaliser de l'aéronef par rapport au sol selon une direction latérale (DLAT) présente dans un plan horizontal perpendiculaire à la pesanteur, ladite direction latérale étant perpendiculaire au cap suivi.

6. Procédé selon la revendication 5,
**caractérisé en ce que** ledit procédé comporte les étapes suivantes :

   - calcul avec l'unité de filtrage (50) de composantes d'une vitesse sol estimée de l'aéronef (1) et d'au moins une marge de précision de mesure, ladite au moins une marge de précision de mesure comprenant une marge de précision de vitesse pour chaque composante de cette vitesse sol estimée de l'aéronef (1),
   - comparaison de chaque marge de précision de vitesse avec un seuil dit « seuil de vitesse », ladite loi de pilotage secondaire en vitesse sol ne pouvant être appliquée que si au moins une marge de précision de vitesse est supérieure ou égale au seuil de vitesse.

7. Procédé selon la revendication 6,
**caractérisé en ce que** ledit seuil de vitesse est égal à 2 noeuds.

8. Procédé selon l'une quelconque des revendications 1 à 7,
**caractérisé en ce qu'**une loi de pilotage dégradée est une loi de pilotage de tenue des attitudes (L3) qui génère un ordre donné à au moins un actionneur (5) pour tenir un objectif d'assiette de l'aéronef (1).

9. Procédé selon la revendication 8,
**caractérisé en ce que** ledit procédé présente les étapes suivantes :

   - calcul avec l'unité de filtrage (50) de composantes d'une accélération estimée de l'aéronef (1) et d'au moins une marge de précision de mesure, ladite au moins une marge de précision de mesure comprenant une marge de précision d'accélération pour chaque composante de cette accélération estimée de l'aéronef (1),
   - comparaison de chaque marge de précision d'accélération avec un seuil dit « seuil d'accélération », ladite loi de pilotage de tenue des attitudes ne pouvant être appliquée que si au moins une marge de précision d'accélération est supérieure ou égale au seuil d'accélération.

10. Procédé selon la revendication 9,
**caractérisé en ce que** ledit seuil d'accélération est égal à un millième de la gravité terrestre.

11. Procédé selon l'une quelconque des revendications 1 à 10,

**caractérisé en ce qu'**une loi de pilotage dégradée est une loi de pilotage de tenue de vitesse angulaire (L4) qui génère un ordre donné à au moins un actionneur (5) pour réaliser un objectif de vitesse angulaire de l'aéronef (1) en utilisant uniquement des composantes d'une vitesse angulaire de l'aéronef (1).

12. Procédé selon la revendication 11,
**caractérisé en ce que** ledit procédé présente les étapes suivantes :

   - calcul avec l'unité de filtrage (50) d'un angle d'attitude en roulis et d'un angle d'attitude en tangage estimés de l'aéronef et d'au moins une marge de précision de mesure, ladite au moins une marge de précision de mesure comprenant une marge de précision d'angle de roulis et une marge de précision d'angle de tangage,
   - comparaison de la marge de précision d'angle de roulis et de la marge de précision d'angle de tangage avec un seuil dit « seuil angulaire », ladite loi de pilotage de vitesse angulaire ne pouvant être appliquée que si au moins une desdites marge de précision d'angle de roulis et d'angle de tangage est supérieure ou égale au seuil angulaire.

13. Procédé selon la revendication 12,
**caractérisé en ce que** ledit écart d'attitude est égal à une valeur comprise entre 3 et 5 degrés.

14. Procédé selon la revendication 6 et la revendication 9,
**caractérisé en ce que** ledit procédé présente les étapes de :

   - commande dudit actionneur en appliquant ladite loi de pilotage par défaut tant que chaque marge de précision de mesure est inférieure au seuil correspondant,
   - commande dudit actionneur en appliquant ladite loi de pilotage secondaire en vitesse sol que si au moins une marge de précision de vitesse est supérieure ou égale au seuil de vitesse et si aucune marge de précision d'accélération n'est supérieure ou égale au seuil d'accélération.
   - commande dudit actionneur en appliquant ladite loi de pilotage de tenue des attitudes si au moins une marge de précision d'accélération est supérieure ou égale au seuil d'accélération.

15. Procédé selon la revendication 6, et la revendication 9 et la revendication 12,
**caractérisé en ce que** ledit procédé présente les étapes suivantes :

   - commande d'un actionneur en appliquant la loi de pilotage par défaut tant que chaque marge de précision de mesure est inférieure au seuil correspondant,

- commande dudit actionneur en appliquant la loi de pilotage secondaire en vitesse sol que si au moins une marge de précision de vitesse est supérieure ou égale au seuil de vitesse et si aucune marge de précision d'accélération est supérieure ou égale au seuil d'accélération et si aucune desdites valeurs de précision d'angle de roulis et d'angle de tangage est supérieure ou égale au seuil angulaire,

- commande dudit actionneur en appliquant ladite loi de pilotage de tenue des attitudes si au moins une marge de précision d'accélération est supérieure ou égale au seuil d'accélération et si aucune desdites valeurs de précision d'angle de roulis et d'angle de tangage n'est supérieure ou égale au seuil angulaire

- commande dudit actionneur en appliquant ladite loi de pilotage de vitesse angulaire si au moins une desdites marge de précision d'angle de roulis et d'angle de tangage est supérieure ou égale au seuil angulaire.

16. Procédé selon l'une quelconque des revendications 1 à 15,
**caractérisé en ce que** ledit système de mesure principal (30) comporte une pluralité de gyromètres (32) et une pluralité d'accéléromètres (31).

17. Procédé selon la revendication 16,
**caractérisé en ce que** chaque gyromètre (32) appartient à une classe de gyromètre ayant une précision d'au moins 0.1 deg/h.

18. Procédé selon l'une quelconque des revendications 1 à 17,
**caractérisé en ce que** ledit système de mesure secondaire (40) comporte un moyen de positionnement par satellites (45).

19. Procédé selon l'une quelconque des revendications 1 à 18,
**caractérisé en ce que** ledit système de mesure secondaire (40) comporte un moyen de détection d'objet émettant un signal de détection susceptible de revenir vers le moyen de détection d'objet suite à un impact avec un objet.

20. Procédé selon l'une quelconque des revendications 1 à 19,
**caractérisé en ce que** ladite unité de filtrage (50) appliquant un algorithme de Kalman établissant une matrice de covariance, chaque marge de précision de mesure est égale à la racine carré d'un terme présent sur une diagonale de ladite matrice de covariance.

21. Dispositif d'aide au pilotage (10) d'un aéronef (1), ledit aéronef (1) comprenant au moins un actionneur (5) agissant sur un organe de contrôle (2) permettant de contrôler la position de l'aéronef (1) dans l'espace, ledit dispositif d'aide au pilotage (10) comprenant un module de pilotage automatique (20) stockant au moins deux lois de pilotage pouvant chacune être appliquée pour générer un ordre transmis à au moins un actionneur (5), ledit dispositif d'aide au pilotage (10) comprenant un système de mesure principal (30) et un système de mesure secondaire (40) qui déterminent respectivement au moins une valeur dite « valeur prédite » et au moins une valeur dite « valeur mesurée » d'un paramètre utilisé dans une desdites lois de pilotage dénommée « loi de pilotage par défaut », ledit dispositif d'aide au pilotage (10) comporte une unité de filtrage (50) reliée au module de pilotage automatique (20) ainsi qu'au système de mesure principal (30) et au système de mesure secondaire (40),
**caractérisé en ce que** ladite unité de filtrage (50) applique un algorithme de Kalman pour mettre en oeuvre le procédé selon l'une quelconque des revendications 1 à 20.

22. Aéronef (1) comprenant au moins un actionneur (5) agissant sur un organe de contrôle (2) permettant de contrôler la position de l'aéronef dans l'espace,
**caractérisé en ce que** ledit aéronef (1) comporte un dispositif d'aide au pilotage selon la revendication 21.

**Patentansprüche**

1. Verfahren zur Unterstützung der Steuerung eines Luftfahrzeugs (1), welches mindestens ein Stellorgan (5) aufweist, das auf ein Steuerorgan (2) wirkt, welches es ermöglicht, die Lage des Luftfahrzeugs (1) im Raum zu steuern, wobei das Luftfahrzeug (1) mindestens zwei flugmechanische Kontrollgesetze speichert, die jeweils angewendet werden können, um einen Befehl zu erzeugen, der an mindestens ein Stellorgan (5) gesendet wird, wobei das Luftfahrzeug (1) ein Hauptmesssystem (30) und ein sekundäres Messsystem (40) aufweist, welche jeweils mindestens einen "prognostizierter Wert" genannten Wert und mindestens einen "Messwert" genannten Wert eines Parameters bestimmen, der in einem "standardflugmechanisches Kontrollgesetz (L1)" genannten flugmechanischen Kontrollgesetz verwendet wird, wobei jedes von dem standardflugmechanischen Kontrollgesetz unterschiedliche flugmechanische Kontrollgesetz "verschlechtertes flugmechanisches Kontrollgesetz" genannt wird, wobei das Verfahren folgenden Schritt aufweist:

- ausgehend von jedem prognostizierten Wert und jedem Messwert Berechnen mit einer Filtereinheit (50), die einen Kalman-Algorithmus anwendet, eines geschätzten Wertes eines Parameters, der mit einem prognostizierten Wert verbunden ist, und Schätzen mindestens eines Messgenauigkeitsbereichs eines Parameters, der mit einem prognostizierten Wert verbunden ist,

**dadurch gekennzeichnet, dass** das Verfahren folgende Schritte aufweist:

- Vergleichen des Messgenauigkeitsbereichs mit einem entsprechenden Schwellenwert,
- Steuerung des Stellorgans (5) durch automatisches Anwenden des standardflugmechanischen Kontrollgesetzes (L1), solange jeder Messgenauigkeitsbereich kleiner als der entsprechende Schwellenwert ist,
- Steuerung des Stellorgans (5) bei automatischer Anwendung eines verschlechterten flugmechanischen Kontrollgesetzes (L2, L3, L4), wenn mindestens ein Messgenauigkeitsbereich größer oder gleich dem entsprechenden Schwellenwert ist.

2. Verfahren nach Anspruch 1,
**dadurch gekennzeichnet, dass** das Verfahren einen Alarmschritt, während dem ein Alarm erzeugt wird, wenn ein verschlechtertes flugmechanisches Kontrollgesetz (L2, L3, L4) angewendet wird, aufweist.

3. Verfahren nach einem der Ansprüche 1 bis 2,
**dadurch gekennzeichnet, dass** das verschlechterte flugmechanische Kontrollgesetz ein flugmechanisches Hauptkontrollgesetz für die Geschwindigkeit über dem Boden (L1) ist, welches einen Befehl erzeugt, der an mindestens ein Stellorgan (5) gegeben wird, um einen Sollwert der Geschwindigkeit über dem Boden zu halten.

4. Verfahren nach Anspruch 3,
**dadurch gekennzeichnet, dass** das flugmechanische Hauptkontrollgesetz für die Geschwindigkeit über dem Boden während jeder Kurve eine von dem Luftfahrzeug (1) relativ zum Boden (200) zu realisierende seitliche Geschwindigkeit in einer Seitenrichtung (DLAT), die in einer horizontalen Ebene (PH) vorliegt, die senkrecht zu der Schwerkraft (PES) verläuft, vorschreibt, wobei die Seitenrichtung (DLAT) senkrecht zu dem verfolgten Kurs (CP) steht.

5. Verfahren nach einem der Ansprüche 1 bis 4,
**dadurch gekennzeichnet, dass** ein verschlechtertes flugmechanisches Kontrollgesetz ein sekundäres flugmechanisches Kontrollgesetz für die Geschwindigkeit über dem Boden (L2) ist, welches einen Befehl erzeugt, der an mindestens ein Stellorgan (5) gegeben wird, um einen Sollwert der Geschwindigkeit über dem Boden zu halten, wobei das sekundäre flugmechanische Kontrollgesetz für die Geschwindigkeit über dem Boden während jeder Kurve nicht eine seitliche Geschwindigkeit steuert, die von dem Luftfahrzeug relativ zum Boden in einer Seitenrichtung (DLAT), die in einer horizontalen Ebene vorliegt, die senkrecht zu der Schwerkraft verläuft, zu realisieren ist, wobei die Seitenrichtung senkrecht zu dem verfolgten Kurs verläuft.

6. Verfahren nach Anspruch 5,
**dadurch gekennzeichnet, dass** das Verfahren folgende Schritte aufweist:

- Berechnen, mit einer Filtereinheit (50) von Komponenten, einer geschätzten Geschwindigkeit des Luftfahrzeugs (1) über dem Boden und mindestens eines Messgenauigkeitsbereichs, wobei der mindestens eine Messgenauigkeitsbereich einen Genauigkeitsbereich der Geschwindigkeit für jede Komponente der geschätzten Geschwindigkeit des Luftfahrzeugs (1) über dem Boden aufweist,
- Vergleichen eines jeden Genauigkeitsbereichs der Geschwindigkeit mit einem "Geschwindigkeitsschwellenwert" genannten Schwellenwert, wobei das sekundäre flugmechanische Kontrollgesetz für die Geschwindigkeit über dem Boden nicht angewendet werden kann, wenn mindestens ein Genauigkeitsbereich der Geschwindigkeit größer oder gleich dem Geschwindigkeitsschwellenwert ist.

7. Verfahren nach Anspruch 6,
**dadurch gekennzeichnet, dass** der Geschwindigkeitsschwellenwert gleich 2 Knoten ist.

8. Verfahren nach einem der Ansprüche 1 bis 7,
**dadurch gekennzeichnet, dass** ein verschlechtertes flugmechanisches Kontrollgesetz ein flugmechanisches Kontrollgesetz (L3) des Beibehaltens des Verhaltens ist, welches einen Befehl erzeugt, der an mindestens ein Stellorgan (5) gegeben wird, um eine Soll-Lage des Luftfahrzeugs (1) beizubehalten.

9. Verfahren nach Anspruch 8,
**dadurch gekennzeichnet, dass** das Verfahren folgende Schritte aufweist:

- Berechnen, mit einer Filtereinheit (50) von Komponenten, einer geschätzten Beschleunigung des Luftfahrzeugs (1) und mindestens eines Messgenauigkeitsbereichs, wobei der mindestens eine Messgenauigkeitsbereich einen Genauigkeitsbereich der Beschleunigung für jede Komponente dieser geschätzten Beschleunigung des Luftfahrzeugs (1) aufweist,
- Vergleichen jedes Beschleunigungs-Messgenauigkeitsbereichs mit einem "Beschleunigungsschwellenwert" genannten Schwellenwert, wobei das flugmechanische Kontrollgesetz des Beibehaltens des Verhaltens nicht angewendet werden kann, wenn mindestens ein Beschleunigungsgenauigkeitsbereich größer oder gleich dem Beschleunigungsschwellenwert ist.

10. Verfahren nach Anspruch 9,
**dadurch gekennzeichnet, dass** der Beschleunigungsschwellenwert gleich einem Tausendstel der Schwerkraft ist.

11. Verfahren nach einem der Ansprüche 1 bis 10,
**dadurch gekennzeichnet, dass** das verschlechterte flugmechanische Kontrollgesetz ein flugmechanisches Kontrollgesetz (L4) des Beibehaltens der Winkelgeschwindigkeit ist, welches einen Befehl erzeugt, der an mindestens ein Stellorgan (5) abgegeben wird, um eine Soll-Winkelgeschwindigkeit des Luftfahrzeugs (1) zu realisieren unter Anwendung nur von Komponenten einer Winkelgeschwindigkeit des Luftfahrzeugs (1).

12. Verfahren nach Anspruch 11,
**dadurch gekennzeichnet, dass** das Verfahren folgende Schritte aufweist:

- Berechnen, mit einer Filtereinheit (50), eines geschätzten Winkels eines Rollverhaltens und eines geschätzten Winkels eines Kippverhaltens des Luftfahrzeugs und mindestens eines Messgenauigkeitsbereichs, wobei der mindestens eine Messgenauigkeitsbereich einen Genauigkeitsbereich des Rollwinkels und einen Genauigkeitsbereich des Kippwinkels aufweist,
- Vergleichen des Genauigkeitsbereichs des Rollwinkels und des Genauigkeitsbereichs des Kippwinkels mit einem "Winkelschwellenwert" genannten Schwellenwert, wobei das flugmechanische Kontrollgesetz für Winkel nicht angewendet werden kann, wenn der Genauigkeitsbereich für den Rollwinkel und/oder der Genauigkeitsbereich für den Kippwinkel größer oder gleich dem Winkelschwellenwert ist.

13. Verfahren nach Anspruch 12,
**dadurch gekennzeichnet, dass** die Verhaltensabweichung gleich einem Wert ist, der zwischen 3 und 5 Grad liegt.

14. Verfahren nach den Ansprüchen 6 und 9,
**dadurch gekennzeichnet, dass** das Verfahren folgende Schritte aufweist:

- Steuerung des Stellorgans durch Anwendung des standardflugmechanischen Kontrollgesetzes, solange jeder Messgenauigkeitsbereich kleiner als der entsprechende Schwellenwert ist,
- Steuerung des Stellorgans durch Anwendung des sekundären flugmechanischen Kontrollgesetzes für die Geschwindigkeit über dem Boden, wenn mindestens ein Genauigkeitsbereich der Geschwindigkeit größer oder gleich dem Geschwindigkeitsschwellenwert ist, und wenn ein Beschleunigungsgenauigkeitsbereich größer oder gleich dem Beschleunigungsschwellenwert ist,
- Steuerung des Stellorgans durch Anwendung des flugmechanischen Kontrollgesetzes für das Beibehalten des Verhaltens, wenn mindestens ein Beschleunigungsgenauigkeitsbereich größer oder gleich dem Beschleunigungsschwellenwert ist.

15. Verfahren nach den Ansprüchen 6, 9 und 12,
**dadurch gekennzeichnet, dass** das Verfahren folgende Schritte aufweist:

- Steuerung eines Stellorgans durch Anwendung des standardflugmechanischen Kontrollgesetzes, solange jeder Messgenauigkeitsbereich kleiner als der entsprechende Schwellenwert ist,
- Steuerung des Stellorgans durch Anwendung des sekundären flugmechanischen Kontrollgesetzes für die Geschwindigkeit über dem Boden, wenn mindestens ein Geschwindigkeitspräzisionsbereich größer oder gleich dem Geschwindigkeitsschwellenwert ist und kein Beschleunigungsgenauigkeitsbereich größer oder gleich dem Beschleunigungsschwellenwert ist, und wenn keiner der Genauigkeitswerte des Rollwinkels und des Kippwinkels größer oder gleich dem Winkelschwellenwert ist,
- Steuerung des Stellorgans durch Anwendung des flugmechanischen Kontrollgesetzes für das Beibehalten des Verhaltens, wenn mindestens ein Beschleunigungsgenauigkeitsbereich größer oder gleich dem Beschleunigungsschwellenwert ist, und wenn keiner der Werte der Genauigkeit des Rollwinkels und des Kippwinkels größer oder gleich dem Winkelschwellenwert ist,
- Steuerung des Stellorgans durch Anwendung des flugmechanischen Kontrollgesetzes für die Winkelgeschwindigkeit, wenn mindestens einer der Genauigkeitsbereiche des Rollwinkels und des Kippwinkels größer oder gleich dem Winkelschwellenwert ist.

16. Verfahren nach einem der Ansprüche 1 bis 15,

**dadurch gekennzeichnet, dass** das Hauptmesssystem (30) eine Mehrzahl von Gyrometern (32) und eine Mehrzahl von Beschleunigungsmessern (31) aufweist.

17. Verfahren nach Anspruch 16,
**dadurch gekennzeichnet, dass** jedes Gyrometer (32) zu einer Gyrometerklasse gehört, die eine Genauigkeit von mindestens 0,1 Grad/Stunde aufweist.

18. Verfahren nach einem der Ansprüche 1 bis 17,
**dadurch gekennzeichnet, dass** das sekundäre Messsystem (40) ein satellitengesteuertes Positionierungsmittel (45) aufweist.

19. Verfahren nach einem der Ansprüche 1 bis 18,
**dadurch gekennzeichnet, dass** das sekundäre Messsystem (40) ein Objekterfassungsmittel aufweist, welches ein Erfassungssignal aussendet, das in der Lage ist, zu dem Objekterfassungsmittel zurückzukehren infolge eines Zusammenstoßes mit einem Objekt.

20. Verfahren nach einem der Ansprüche 1 bis 19,
**dadurch gekennzeichnet, dass** die Filtereinheit (50), die einen Kalman-Algorithmus anwendet, eine Kovarianzmatrix erstellt, wobei jeder Messgenauigkeitsbereich gleich der Quadratwurzel eines Terms ist, der auf einer Diagonalen der Kovarianzmatrix liegt.

21. Vorrichtung (10) zur Unterstützung der Steuerung eines Luftfahrzeugs (1), wobei das Luftfahrzeug (1) mindestens ein Stellorgan (5) aufweist, das auf ein Steuerorgan (2) wirkt, welches es erlaubt, die Lage des Luftfahrzeugs (1) im Raum zu steuern, wobei die Vorrichtung (10) zur Unterstützung der Steuerung ein Autopilotmodul (20) aufweist, welches mindestens zwei flugmechanische Kontrollgesetze speichert, die jeweils angewendet werden können, um einen Befehl zu erzeugen, der an mindestens ein Stellorgan (5) gesendet wird, wobei die Vorrichtung (10) zur Unterstützung der Steuerung ein Hauptmesssystem (30) und ein sekundäres Messsystem (40) aufweist, welches jeweils mindestens einen "prognostizierter Wert" genannten Wert und mindestens einen "Messwert" genannten Wert eines Parameters bestimmt, der in einem der flugmechanischen Kontrollgesetze, welches "standardflugmechanisches Kontrollgesetz" genannt wird, verwendet wird, wobei die Vorrichtung (10) zur Unterstützung der Steuerung eine Filtereinheit (50) aufweist, die mit dem Autopilotmodul (20) sowie mit dem Hauptmesssystem (30) und dem sekundären Messsystem (40) verbunden ist,
**dadurch gekennzeichnet, dass** die Filtereinheit (50) einen Kalman-Algorithmus anwendet, um das Verfahren nach einem der Ansprüche 1 bis 20 durchzuführen.

22. Luftfahrzeug (1) mit mindestens einem Stellorgan (5), welches auf ein Steuerorgan (2) wirkt, das es erlaubt, die Lage des Luftfahrzeugs im Raum zu steuern,
**dadurch gekennzeichnet, dass** das Luftfahrzeug (1) eine Vorrichtung zur Unterstützung der Steuerung nach Anspruch 21 aufweist.

**Claims**

1. Method for piloting an aircraft (1) comprising at least one actuator (5) that acts on a control member (2) that allows the position of the aircraft (1) in space to be controlled, said aircraft (1) storing at least two piloting laws that can each be applied in order to generate a command transmitted to at least one actuator (5), said aircraft (1) comprising a main measuring system (30) and a secondary measuring system (40) that determine at least one value referred to as a "predicted value" and at least one value referred to as a "measured value", respectively, of a parameter used in one of said piloting laws, called the "default piloting law (L1)", each separate piloting law of the default piloting law being referred to as the "degraded piloting law (L2, L3, L4)", said method comprising the following step:

- calculating, from each predicted value and each measured value and using a filtering unit (50) that applies a Kalman algorithm, an estimated value of a parameter associated with a predicted value, and estimating at least one measurement accuracy margin of a parameter associated with a predicted value,

**characterised in that** said method comprises the following steps:

- comparing the measurement accuracy margin with a corresponding threshold,
- controlling said actuator (5) by automatically applying said default piloting law (L1) while each measurement accuracy margin is less than the corresponding threshold,
- controlling said actuator (5) by automatically applying a degraded piloting law (L2, L3, L4) when at least one measurement accuracy margin is greater than or equal to the corresponding threshold.

2. Method according to claim 1, **characterised in that** said method comprises an alerting step, during which an alert is generated when a degraded piloting law (L2, L3, L4) is applied.

3. Method according to either of claims 1 to 2, **characterised in that** said default piloting law is a main ground speed piloting law (L1) that generates a command given to at least one actuator (5) to maintain a target ground speed.

4. Method according to claim 3, **characterised in that** said main ground speed piloting law requires, during each turning manoeuvre, a lateral speed to be achieved by the aircraft (1) relative to the ground (200) in a lateral direction (DLAT) within a horizontal plane (PH) perpendicular to the direction of gravity (PES), said lateral direction (DLAT) being perpendicular to the course (CP) being followed.

5. Method according to any of claims 1 to 4, **characterised in that** a degraded piloting law is a secondary ground speed piloting law (L2) that generates a command given to at least one actuator (5) to maintain a target ground speed, said secondary ground speed piloting law not controlling, during each turning manoeuvre, a lateral speed to be achieved by the aircraft relative to the ground in a lateral direction (DLAT) within a horizontal plane perpendicular to the direction of gravity, said lateral direction being perpendicular to the course being followed.

6. Method according to claim 5, **characterised in that** said method comprises the following steps:

    - calculating, using the filtering unit (50), components of an estimated ground speed of the aircraft (1) and at least one measurement accuracy margin, said at least one measurement accuracy margin comprising a speed accuracy margin for each component of said estimated ground speed of the aircraft (1),
    - comparing each speed accuracy margin with a threshold referred to as the "speed threshold", it only being possible to apply said secondary ground speed piloting law if at least one speed accuracy margin is greater than or equal to the speed threshold.

7. Method according to claim 6, **characterised in that** said speed threshold is equal to 2 knots.

8. Method according to any of claims 1 to 7, **characterised in that** a degraded piloting law is a piloting law for maintaining attitudes (L3) that generates a command given to at least one actuator (5) to maintain an attitude target of the aircraft (1).

9. Method according to claim 8, **characterised in that** said method comprises the following steps:

    - calculating, using the filtering unit (50), components of an estimated acceleration of the aircraft (1) and at least one measurement accuracy margin, said at least one measurement accuracy margin comprising an acceleration accuracy margin for each component of said estimated acceleration of the aircraft (1),
    - comparing each acceleration accuracy margin with a threshold referred to as the "acceleration threshold", it only being possible to apply said piloting law for maintaining attitudes if at least one acceleration accuracy margin is greater than or equal to the acceleration threshold.

10. Method according to claim 9, **characterised in that** said acceleration threshold is equal to one thousandth of the Earth's gravity.

11. Method according to any of claims 1 to 10, **characterised in that** a degraded piloting law is a piloting law for maintaining angular speed (L4) that generates a command given to at least one actuator (5) to attain an angular speed target of the aircraft (1) using only components of an angular speed of the aircraft (1).

12. Method according to claim 11, **characterised in that** said method comprises the following steps:

    - calculating, using the filtering unit (50), an estimated roll attitude angle and an estimated pitch attitude angle of the aircraft and at least one measurement accuracy margin, said at least one measurement accuracy margin comprising a roll-angle accuracy margin and a pitch-angle accuracy margin,
    - comparing the roll-angle accuracy margin and the pitch-angle accuracy margin with a threshold referred to as the "angular threshold", it only being possible to apply said angular speed piloting law if at least one of said roll-angle accuracy margin and pitch-angle accuracy margin is greater than or equal to the angular threshold.

13. Method according to claim 12, **characterised in that** said attitude difference is equal to a value of between 3 and 5 degrees.

14. Method according to claim 6 and claim 9, **characterised in that** said method comprises the steps of:

    - controlling said actuator by applying said default piloting law while each measurement accuracy margin is less than the corresponding threshold,
    - controlling said actuator by applying said secondary ground speed piloting law only if at least one speed accuracy margin is greater than or equal to the speed threshold and if no acceleration accuracy margin is greater than or equal to the acceleration threshold,
- controlling said actuator by applying said piloting law for maintaining attitudes if at least one acceleration accuracy margin is greater than or equal to the acceleration threshold.

15. Method according to claim 6, claim 9 and claim 12, **characterised in that** said method comprises the following steps:

- controlling an actuator by applying the default piloting law while each measurement accuracy margin is less than the corresponding threshold,
- controlling said actuator by applying the secondary ground speed piloting law only if at least one speed accuracy margin is greater than or equal to the speed threshold and if no acceleration accuracy margin is greater than or equal to the acceleration threshold and if none of said roll-angle accuracy values and pitch-angle accuracy values is greater than or equal to the angular threshold,
- controlling said actuator by applying said piloting law for maintaining attitudes if at least one acceleration accuracy margin is greater than or equal to the acceleration threshold and if none of said roll-angle accuracy values and pitch-angle accuracy values is greater than or equal to the angular threshold,
- controlling said actuator by applying said angular speed piloting law if at least one of said roll-angle accuracy margin and pitch-angle accuracy margin is greater than or equal to the angular threshold.

16. Method according to any of claims 1 to 15, **characterised in that** said main measuring system (30) comprises a plurality of gyrometers (32) and a plurality of accelerometers (31).

17. Method according to claim 16, **characterised in that** each gyrometer (32) belongs to a class of gyrometer having an accuracy of at least 0.1 deg/hour.

18. Method according to any of claims 1 to 17, **characterised in that** said secondary measuring system (40) comprises a satellite positioning means (45).

19. Method according to any of claims 1 to 18, **characterised in that** said secondary measuring system (40) comprises an object detection means that emits a detection signal that can return to the object detection means following an impact with an object.

20. Method according to any of claims 1 to 19, **characterised in that**, with said filtering unit (50) applying a Kalman algorithm establishing a covariance matrix, each measurement accuracy margin is equal to the square root of a term present on a diagonal of said covariance matrix.

21. Device (10) for piloting an aircraft (1), said aircraft (1) comprising at least one actuator (5) that acts on a control member (2) that allows the position of the aircraft (1) in space to be controlled, said piloting device (10) comprising an automatic piloting module (20) that stores at least two piloting laws that can each be applied in order to generate a command transmitted to at least one actuator (5), said piloting device (10) comprising a main measuring system (30) and a secondary measuring system (40) that determine at least one value referred to as a "predicted value" and at least one value referred to as a "measured value", respectively, of a parameter used in one of said piloting laws, called the "default piloting law", and said piloting device (10) comprises a filtering unit (50) connected to the automatic piloting module (20) and to the main measuring system (30) and the secondary measuring system (40), **characterised in that** said filtering unit (50) applies a Kalman algorithm in order to implement the method according to any of claims 1 to 20.

22. Aircraft (1) comprising at least one actuator (5) that acts on a control member (2) that allows the position of the aircraft (1) in space to be controlled, **characterised in that** said aircraft (1) comprises a piloting device according to claim 21.

Fig.1

Fig.2

Fig.3

Fig.4

Fig.5

Fig.6

Fig.7

Fig.8

## Fig.9

## Fig.10

## Fig.11

**EP 3 179 328 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2814433
- FR 3030058
- FR 1402824
- US 2014027565 A
- US 2014316615 A
- FR 2978858
- US 2013261853 A